# EUROPEAN PATENT APPLICATION

(11) **EP 4 455 959 A1**
(43) Date of publication of application: **30.10.2024**
(21) Application number: 24166901.9
(22) Date of filing: 27.03.2024
(51) Int. Cl.: G06Q 10/0639, G05B 23/02, G06Q 50/06

(54) **APPARATUSES, COMPUTER-IMPLEMENTED METHODS, AND COMPUTER PROGRAM PRODUCTS FOR IMPROVED ASSET PERFORMANCE MONITORING AND RANKING**

(30) Priority: 21.04.2023 US 202318304424
(71) Applicant: Honeywell International Inc., Charlotte, NC 28202 (US)
(72) Inventor: HALLIHOLE, Sriram Poojary, Charlotte 28202 (US); MANJUNATHA, Rajeeva Naduthota, Charlotte 28202 (US); KATHARI, Sudhakar, Charlotte 28202 (US); RAJ, Sumit, Charlotte 28202 (US)
(74) Representative: Haseltine Lake Kempner LLP

(57) **Abstract**

Embodiments of the disclosure provide for monitoring asset performance and ranking of assets based thereon. Such embodiments enable identifying poor-performance assets, determining poor performance factors, and generating action recommendations for mitigating poor performance. Some embodiments receive monitored data associated with assets, generate, for each asset and using the monitored data, performance metrics, normalize the performance metrics for each asset to generate normalized performance metrics for each asset, wherein each performance metric of the normalized performance metrics indicates a level of performance of the corresponding asset. Some embodiments generate an aggregated performance metric for each asset based at least in part on a combination of the plurality of normalized performance metrics corresponding to the asset. Some embodiments generate a ranking of the assets based at least in part on the aggregated performance metric for each asset, wherein the ranking of the assets indicates a level of poor performance for each asset.

## Description

### TECHNOLOGICAL FIELD

Embodiments of the present disclosure are generally directed to monitoring asset performance and generating rankings of assets based at least in part on asset performance.

### BACKGROUND

Industrial processes typically involve hundreds to thousands of assets. To ensure proper functioning and throughput of industrial processes, each asset may be monitored, such as to determine if a particular asset is functioning as desired or expected.

Applicant has discovered various technical problems associated with conventional detection and notifying of asset performance. Through applied effort, ingenuity, and innovation, Applicant has solved many of these identified problems by developing the embodiments of the present disclosure, which are described in detail below.

### BRIEF SUMMARY

In general, embodiments of the present disclosure herein provide for improved monitoring asset performance and ranking assets based at least in part on asset performance. Other implementations for monitoring asset performance and ranking assets based at least in part on asset performance will be, or will become, apparent to one with skill in the art upon examination of the following figures and detailed description. It is intended that all such additional implementations be included within this description be within the scope of the disclosure, and be protected by the following claims.

In accordance with a first aspect of the disclosure, a computer-implemented method for improved asset performance monitoring and asset ranking is provided. The computer-implemented method is executable utilizing any of a myriad of computing device(s) and/or combinations of hardware, software, firmware. In some example embodiments an example computer-implemented method includes receiving monitored data associated with a plurality of assets. The example computer-implemented method further includes generating, for each of the plurality of assets and using the monitored data, a plurality of performance metrics. The example computer-implemented method further includes normalizing the plurality of performance metrics for each of the plurality of assets to generate a plurality of normalized performance metrics for each asset of the plurality of assets. The performance metric of the plurality of normalized performance metrics may indicate a level of performance of the corresponding asset. The example computer-implemented method further includes generating an aggregated performance metric for each particular asset of the plurality of assets based at least in part on a combination of the plurality of normalized performance metrics corresponding to the asset. The example computer-implemented method further includes generating a ranking of the plurality of assets based at least in part on the aggregated performance metric for each asset, wherein the ranking of the plurality of assets indicates a level of poor performance for each asset of the plurality of assets.

In some example embodiments, the computer-implemented method further includes generating an importance-weighted performance metric for each of the plurality of assets based at least in part on a importance factor corresponding to the asset and the aggregated performance metric corresponding to the asset. The example computer-implemented method further includes generating the ranking of the plurality of assets based at least in part on the importance-weighted performance metric.

In some example embodiments, the computer-implemented method further includes determining an asset type of each of the plurality of assets. In some example embodiments, the example computer-implemented method further includes generating the plurality of performance metrics for each particular asset of the plurality of assets based at least in part on the asset type corresponding to the particular asset.

In some example embodiments, the computer-implemented method further includes determining the importance factor for each particular asset of the plurality of assets based at least in part on the asset type corresponding to the particular asset.

In some example embodiments, the computer-implemented method further includes identifying a particular poor-performance asset from the plurality of assets based at least in part on the ranking. In some example embodiments, the computer-implemented method further includes determining at least one poor performance factor for the particular poor-performing asset based at least in part on the plurality of normalized performance metrics associated with the particular poor-performance asset.

In some example embodiments, the computer-implemented method further includes generating a second ranking of the plurality of normalized performance metrics associated with the particular poor-performing asset, wherein the second ranking of the plurality of normalized performance metrics indicates a degree of difference between each normalized performance metric from a reference value corresponding to the performance metric.

In some example embodiments, the computer-implemented method further includes determining the at least one poor performance factor based at least in part on the second ranking of the plurality of normalized performance metrics.

In some example embodiments, the computer-implemented method further includes identifying a particular poor-performance asset from the plurality of assets based at least in part on the ranking. In some example embodiments, the computer-implemented method further includes determining at least one poor performance factor for the particular poor-performing asset based a comparison between one or more predetermined thresholds and at least one performance metric of the plurality of performance metrics associated with the particular poor-performance asset.

In some example embodiments, the computer-implemented method further includes adjusting the one or more predetermined thresholds based at least in part on at least one of a downtime metric, a criticality metric, a cost metric, or other user-inputted metric.

In some example embodiments, the computer-implemented method further includes generating, using a machine learning model and the at least one poor performance factor, at least one recommended mitigation action associated with the particular poor-performing asset.

In some example embodiments, the machine learning model is a decision tree.

In some example embodiments, the computer-implemented method further includes automatically performing the at least one recommended mitigation action by automatically adjusting one or more operational parameters of the particular poor-performance asset.

In some example embodiments, an ordering of the plurality of assets in the ranking indicates poor-performing assets.

In some example embodiments, top-ranked entries of the ranking indicate poorest-performing assets.

In some example embodiments, aggregated performance metric is an average performance metric.

In some example embodiments, the computer-implemented method further includes identifying one or more poor-performing assets based at least in part on the ranking.

In some example embodiments, the computer-implemented method further includes generating a user interface based at least in part on the ranking. In some example embodiments, the computer-implemented method further includes providing the user interface to at least one computing device.

In some example embodiments, the user interfaces includes at least one poor performance factor for at least one of the plurality of assets in the ranking.

In some example embodiments, the user interface further includes at least one recommended action for mitigation of the at least one of the plurality of assets.

In accordance with another aspect of the present disclosure, an apparatus for improved asset performance monitoring and asset ranking is provided. The apparatus in some embodiments includes at least one processor and at least one non-transitory memory, the at least non-transitory one memory having computer-coded instructions stored thereon. The computer-coded instructions in execution with the at least one processor causes the apparatus to perform any one of the example computer-implemented methods described herein. In some other embodiments, the apparatus includes means for performing each step of any of the computer-implemented methods described herein.

In accordance with another aspect of the present disclosure, a computer program product for improved asset performance monitoring and asset ranking is provided. The compute program product in some embodiments includes at least one non-transitory computer-readable storage medium having computer program code stored thereon. The computer program code in execution with at least one processor is configured for performing any one of the example computer-implemented methods described herein.

### BRIEF DESCRIPTION OF THE DRAWINGS

Having thus described the embodiments of the disclosure in general terms, reference now will be made to the accompanying drawings, which are not necessarily drawn to scale, and wherein:
FIG. 1 illustrates a block diagram of a system that may be specially configured within which embodiments of the present disclosure may operate;
FIG. 2 illustrates a block diagram of an example apparatus that may be specially configured in accordance with at least some example embodiments of the present disclosure;
FIG. 3 illustrates an example data flow in accordance with at least some example embodiments of the present disclosure;
FIG. 4 illustrates an example data architecture in accordance with at least some example embodiments of the present disclosure;
FIG. 5 illustrates an example graphical user interface including a ranking of assets based at least in part on performance metrics in accordance with at least some example embodiments of the present disclosure;
FIG. 6 illustrates an example diagram for outputting a ranking of assets based at least in part on performance metrics in accordance with at least some example embodiments of the present disclosure;
FIG. 7 illustrates a flowchart depicting operations of an example process for monitoring assets including outputting a ranking of assets in accordance with at least some example embodiments of the present disclosure;
FIG. 8 illustrates a flowchart depicting operations of an example process for managing assets including outputting a recommended mitigation action based at least in part on a ranking of the assets in accordance with at least some example embodiments of the present disclosure;
FIG. 9 illustrates a flowchart depicting operations of an example sequence for generating a recommended mitigation action based at least in part on one or more performance metrics in accordance with at least some example embodiments of the present disclosure;
FIG. 10 illustrates a flowchart depicting operations of an example sequence for generating a recommended mitigation action based at least in part on one or more performance metrics in accordance with at least some example embodiments of the present disclosure;
FIG. 11 illustrates a flowchart depicting operations of an example sequence for generating a recommended mitigation action based at least in part on one or more performance metrics in accordance with at least some example embodiments of the present disclosure; and
FIG. 12 illustrates a flowchart depicting operations of an example sequence for generating a recommended mitigation action based at least in part on one or more performance metrics in accordance with at least some example embodiments of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

### Overview

Any number of assets, for example a single asset or multiple assets in a particular industrial environment, may be monitored to ensure that such assets are performing as desired, intended, or the like. However, often it is challenging for a given user and/or system to identify which of the hundreds to thousands of assets demonstrate substandard performance. Further, in a circumstance where multiple assets are demonstrating substandard performance, it is challenging for a user and/or system to identify which of the substandard performance assets should be given priority for mitigation efforts, such as maintenance, repair, replacement, and/or the like.

In various contexts, various assets and asset types may demonstrate varying levels of performance. Decreases in asset performance may pose a risk to the safety of an environment, threaten the ability of other assets to perform, harm the productivity or stability of an industrial process or product, cause a waste of any of a myriad of resources, and/or induce or worsen any of a myriad of additional and/or associated problems. Due to the high number of assets and asset types in an asset environment, fluctuations in asset performance may be frequent and there exists a technical challenge to identifying assets whose performance has fluctuated most substantially and/or most consequentially. For example, cross-comparison of asset performance between assets of differing asset type presents a time-consuming challenge that can lead to inaccurate results. Additional and related technical challenges exist for determining factors that contribute to fluctuations in asset performance and potential actions that may be performed to mitigate poor performance in an asset. Accordingly, the inventors have identified an unmet need for improved systems and processes for monitoring asset performance and ranking assets based on asset performance. For example, in a circumstance where multiple poor performance assets are determined, determining how to spend a limited amount of resources (e.g., maintenance time, maintenance personnel, and/or the like) may be important to determine which assets should receive priority of using such resources.

To avoid the problems associated with asset monitoring and management, it is often desirable to prioritize attention and efforts toward poorest-performing assets. Even in such contexts, identification of poor-performance assets is challenging due to the number of assets and asset types in an asset environment. Predictive performance metrics for assets of a first type may differ from predictive performance for assets of a second type, thereby complicating comparison of asset performances between all assets of an asset environment. Accordingly, the inventors have identified that it is desirable to generate rankings of assets based on predictive metrics of asset performance (referred to herein as "performance metrics"). The inventors further identified that generating accurate performance rankings comprised of assets of differing types is particularly valuable for effective monitoring and management of an asset environment.

Embodiments of the present disclosure utilize particular data-driven insights to generate and/or output rankings of assets that indicate poor performance assets and/or relationships between such poor performance assets. Such data-driven insights may be derived from real-time monitored and/or otherwise received data regarding the operation of an asset. Some embodiments of the present disclosure utilize particular data-driven insights to determine factors that may be determined to contribute to the poor performance of an asset (referred to herein as "poor performance factors"). Some embodiments of the present disclosure utilize particular data-driven insights and poor performance factors to generate recommended mitigation actions for adjusting one or more operational parameters of an asset, or other properties thereof, to mitigate the poor performance of the asset.

Some embodiments of the present disclosure generate sets of performance metrics for assets based at least in part on monitored data associated with the assets. Some embodiments of the present disclosure generate performance metrics based on an asset type corresponding to the asset. Some embodiments of the present disclosure generate normalized performance metrics that indicate a delta of a performance metric from a threshold value, an expected value, or other reference value such that performance metrics for assets of differing asset type may be accurately compared at speed and scale. Some embodiments of the present disclosure generate aggregated performance metrics, which may be further weight-adjusted to account for one or more factors, such as a level of importance of the corresponding asset. Some embodiments of the present disclosure generate rankings of the assets based on the aggregated performance metrics, where the ordering of the assets indicates poor performing assets. For example, the ordered arrangement of assets in a ranking may provide a comparative indication of how poorly each asset may be performing based on asset-individualized determinations of poor performance indicated in the performance metrics of each asset. The normalized and aggregated performance metrics from which the ranking is generated may allow for comparison and ranking of assets in a manner that is advantageously agnostic to differences in asset type amongst the assets being ranked.

Embodiments of the present disclosure provide a myriad of technical advantages in the technical field of asset operation management, asset performance monitoring, asset performance diagnosis, and asset performance mitigation. Some embodiments utilize data monitored from operation of an asset to accurately determine the present performance of the asset. The data may be collected in real-time during operation of the asset to ensure that accurate determinations are performed based at least in part on the latest status of the asset. Some embodiments generate rankings of assets based on determined asset performance, where an ordering of assets in the ranking may indicate poor-performance assets. Such rankings may be presented to a user for improved asset understanding and prioritization of asset management and intervention. Some embodiments output factors that may contribute to the poor performance of an asset, and such factors may be presented to a user for improved asset monitoring and diagnosis. Some embodiments, output recommendations for actions to mitigate poor performance of an asset, and such factors may be presented to a user for improved asset maintenance, productivity, and stability. Such asset monitoring and ranking is performed data-driven considerations and asset-type independent metrics to provide such more universal insight into asset performance and management than existing attempts.

### Definitions

"Asset" refers to any machinery, computer, robot, or component of a system that operates to serve a particular physical and/or function. Non-limiting examples of an asset include a valve, a damper, a fan, a pump, a proportional-integral-derivative (PID) controller, a multivariable controller, an analyzer, and inferential controls (e.g., one or more feedback control systems for a calculated variable associated with one or more secondary variables).

"Asset type" refers to a categorization or other classification of an asset. Non-limiting examples of an asset type include a fan type, a valve type, a damper type, a pump type, a regulatory type, an instrument type, a control variable type, and a manipulated variable type.

"Monitored data" refers to electronically managed data representing a measured value associated with operation of an asset at a particular timestamp. The monitored data in some contexts include electronically managed data representing a measured value for a particular operational parameter of an asset at a particular timestamp at which the measurement is taken. Non-limiting examples of monitored data include a measured position value on a percentage scale (e.g., between a 0%/minimum position and a 100%/maximum position), a measured absolute position value between a minimum position and a maximum position, a measured speed on a percentage scale (e.g., between a 0%/minimum speed and a 100%/maximum speed), and a measured absolute speed value between a minimum speed and a maximum speed.

"Performance metric" refers to any quantitative or qualitative measure of asset operational aspects or properties. The performance metric in some contexts is generated, by computing elements described herein, based at least in part on monitored data, one or more formulas, one or more models, one or more algorithms, or combinations thereof. Non-limiting examples of performance metrics include relative performance index (RPI), oscillation index (OSI), standard error (SE), service factor (SF), stiction, compression factor (CF), coefficient of variation (COV), valve travel index (VTI), power spectral density (PSD), model quality index (MQI), and phase index (PI).

"Normalized performance metric" refers to a value of a performance metric that is generated using one or more normalization functions, one or more normalization models, one or more normalization algorithms, or combinations thereof. The normalized performance metric in some contexts is based at least in part on a comparison, and/or other operation, performed between a value of a performance metric and a predetermined reference value of the performance metric, such as a maximum value, minimum value, expected value, user-specified value, or other suitable value. The normalized performance metric in some contexts includes a value of a first-type performance metric having been subject to a normalization treatment for purposes of enabling equivalent comparison with other normalized performance metrics associated with one or more secondary-type performance metrics. For example, a first performance metric in some contexts includes a first value of oscillation index and a second performance metric in some contexts includes a second value of compression factor. In this example, a first normalized performance metric in some contexts is generated using the first value and a normalization treatment associated with oscillation index, and a second normalized performance metric in some contexts is generated using the second value and a normalization treatment associated with the second value. Continuing the example, the first and second normalized performance values in some contexts is of equivalent scale, thereby enabling comparison therebetween and other operations, such as aggregation operations. In a particular example, a normalized performance metric for percent error due to stiction in some contexts is generated by dividing the measured value of percent error due to stiction by the maximum value for percent error due to stiction. As another particular example, a normalized performance metric for relative performance index in some contexts is generated by taking a logarithm of the measured value of relative performance index, generating an absolute value of the logarithm, and dividing the absolute value of the logarithm by the maximum value for relative performance index.

"Aggregated performance metric" refers to a value generated based at least in part on two or values of the same performance metric, or of two or more performance metrics. The aggregated performance metric in some contexts is a value generated based at least in part on values of normalized performance metrics. Non-limiting examples of performance metrics include values for mode, mean, median, range, local or global maximum, and local or global minimum. Mean in some contexts refers to weighted or unweighted mean values. Mean in some contexts includes arithmetic mean, harmonic mean, geometric mean, quadratic mean, trimmed mean, interquartile mean, trimean, winsorized mean, midrange, midhinge, and potentially other mean metrics. In some embodiments, an aggregated performance metric is referred to as an average performance metric, such as in instances where the aggregated performance metric is a type of mean value.

"Importance factor" refers to a weight value. The importance factor in some contexts indicates a level of criticality of the asset or asset type with which the importance factor is associated. The importance factor in some contexts is a predefined value based at least in part on asset type. The importance factor in some contexts is a user-specified value, such as a value received via an input to a computing device in communication with one or more embodiments of the asset monitoring systems described herein. In one example, a valve includes a first value of importance factor and a fan includes a second value of importance factor that is less than the first value.

"Importance-weighted performance metric" refers to any value generated based at least in part on an importance factor and a performance metric, normalized performance metric, or aggregated performance metric. For example, an importance-weighted performance metric for a particular asset in some contexts is generated by multiplying an aggregated performance for the particular asset by an importance factor for the particular asset.

"Ranking" refers to a relationship between two or more data objects, such as a list of two or more assets in which an ordering of the assets in the list is based at least in part on values of one or more performance metrics associated with the two or more assets. In one example, a ranking includes a plurality of assets in which an ordering of the plurality of assets is based at least in part on a value of aggregate performance metric for each of the plurality of assets.

"Poor performance" refers to a historical, current, or future state of an asset or instance of the asset in which the asset is functioning outside of expected and/or optimal conditions. Poor performance in some contexts is associated with a decrease in output quality, decrease in asset throughput, decrease in asset speed, increase in asset instability, increase in asset errors, and potentially other conditions. For example, an asset in some contexts is associated with or determined to be "poor performance" in an instance where one or more performance metrics, generated based at least in part on sensor readings of the asset, fail to meet one or more predefined thresholds.

"Poor-performing asset" refers to an asset determined to be associated with poor performance, as described herein.

"Level of poor performance" refers to a relative estimation of the degree to which an asset is performing poorly. For example, the level of poor performance in some contexts includes the position of the asset in a ranking of assets where the ordering of the assets in the ranking is based at least in part on an aggregated performance metric or an importance-weighted performance metric for each asset. As another example, the level of poor performance in some contexts includes the degree of deviation of one or more performance metrics of an asset (e.g., or value(s) based thereon) from one or more predetermined thresholds.

"Poor performance factor" refers to any causative reasoning, factor, or explanation for the determined poor performance of a poor-performing asset. For example, a poor-performing asset in some contexts includes a plurality of performance metrics where, compared to a remaining subset of the plurality of performance metrics, a particular performance metric demonstrates a greatest delta between the value thereof and a predetermined threshold. Continuing the example, a poor performance factor for the poor-performing asset in some contexts includes a causative reasoning for the delta between the particular performance metric and the predetermined threshold. The poor performance factor in some contexts describes a state, condition, error, or other property of the associated asset. Non-limiting examples of poor performance factors include sticky loop, high wear and tear, oversized valve, undersized valve, asset with offset, overtuned, undertuned, low service factor, low per desired mode (DM), high saturation, high compression, non-dispensing, oscillatory, opportunity (e.g., which may indicate assets associated with poor performance that does not fall within criteria for other poor performance factors), high low limit activation, high model quality index, and combinations thereof, among others.

"Predetermined threshold" refers to a data value indicating a cutoff value or range for one or more performance metrics, or combinations thereof, above which a first status associated with the asset is indicated and below which a second status associated with the asset is indicated. In one example, a predetermined threshold indicates a minimum or maximum acceptable value for a performance metric before the status of the asset indicates poor performance, or an operational state or factor associated with poor performance. The predetermined threshold in some contexts refers to a data value indicating a maximum range that a performance metric in some contexts fluctuates while still being considered non-indicative of poor performance associated with a particular asset, or asset type. In one example, the asset embodies a physically moving component or system, and a predetermined threshold in some contexts accounts for small changes in the physical operation of the asset while the asset is outside of a poor performance state and/or in a downtime state.

"Recommended mitigation action" refers to electronically managed data outputtable via at least one computing device that indicates one or more aspects of an asset that is adjustable, investigable, and/or replaceable to attempt to return a poor-performing asset to an operating condition associated with a suitable or prescribed level of performance. Non-limiting examples of the recommended mitigation actions include using an online modeler to correct one or more model errors, initiating an automated tuning process, initiating a cross-correlation analysis, generating and providing recommendations related to regulatory issues, generating recommendations related to adjustment of one or more thresholds or other processing parameters, generating recommendations related to diagnosing and/or servicing sensors, generating asset diagnostic information, and investigating, repairing, and/or servicing one or more assets. The recommended mitigation action in some contexts is indicated to a user in any suitable electronic format, including, but not limited to, electronic reports, electronic mail, telephone calls, audible alerts, computer voice, SMS text message, and updates to displays and/or graphical user interfaces. The recommended mitigation action in some contexts is generated by a model, or plurality of models, as described herein. The recommended mitigation action in some contexts is embodied at least in part as a command provided to one or more computing elements described herein, such as assets, asset monitoring systems, performance monitoring apparatuses, asset environments, sensors, and computing devices.

"Model" refers to any algorithmic and/or machine learning model that generates a particular output, or plurality thereof, based at least in part on one or more inputs. Non-limiting examples of models include regression models, dimensionality reduction models, ensemble learning models, reinforcement learning models, supervised learning models, unsupervised learning models, semi-supervised learning models, Bayesian models, decision tree models, linear classification models, artificial neural networks, association rule learning models, hierarchical clustering models, cluster analysis models, anomaly detection models, deep learning models, feature learning models, and combinations thereof.

"Downtime metric" refers to a measure or status that is indicative of an asset being in a non-operational condition, such as an asset that has been deactivated for scheduled maintenance. The downtime metric in some contexts indicates a time period during which the associated asset will be in a predetermined non-operational state (e.g., deactivated for maintenance, disable for degradation management, and/or the like). The downtime metric in some contexts includes a Boolean operator, such as "Asset:UP," "Asset:DOWN." The downtime metric, or one or more values thereof, in some contexts is associated with an adjustment to one or more predetermined thresholds, as further described herein.

"Criticality metric" refers to a measure or status that is indicative of the criticality of an asset to the process or function in which the asset is being implemented. The criticality metric in some contexts includes a rank of the asset within a ranking of assets associated with a particular process or function, where an ordering of the ranking is based at least in part on the ability to perform the operation or function with or without the corresponding asset (e.g., or at varying performance states of the corresponding asset). The criticality metric, or one or more values thereof, in some contexts is associated with an adjustment to one or more predetermined thresholds, as further described herein.

"Cost metric" refers to a cost associated with performance of the asset, or lack thereof. The cost metric in some contexts includes an amount of resources, monetary or otherwise, that is associated with operating the asset, servicing the asset, replacing the asset, performing a process or function without the asset, combinations thereof, and potentially other cost-dependent factors. The cost metric, or one or more values thereof, in some contexts is associated with an adjustment to one or more predetermined thresholds, as further described herein.

"Sampling frequency" refers to a rate at which one or more sensor(s) are capable of capturing feedback data associated with a particular asset or plurality of assets. In some embodiments for example, a sampling frequency defines a samples-per-minute configuration for a particular sensor to feedback data.

### Example Systems and Apparatuses of the Disclosure

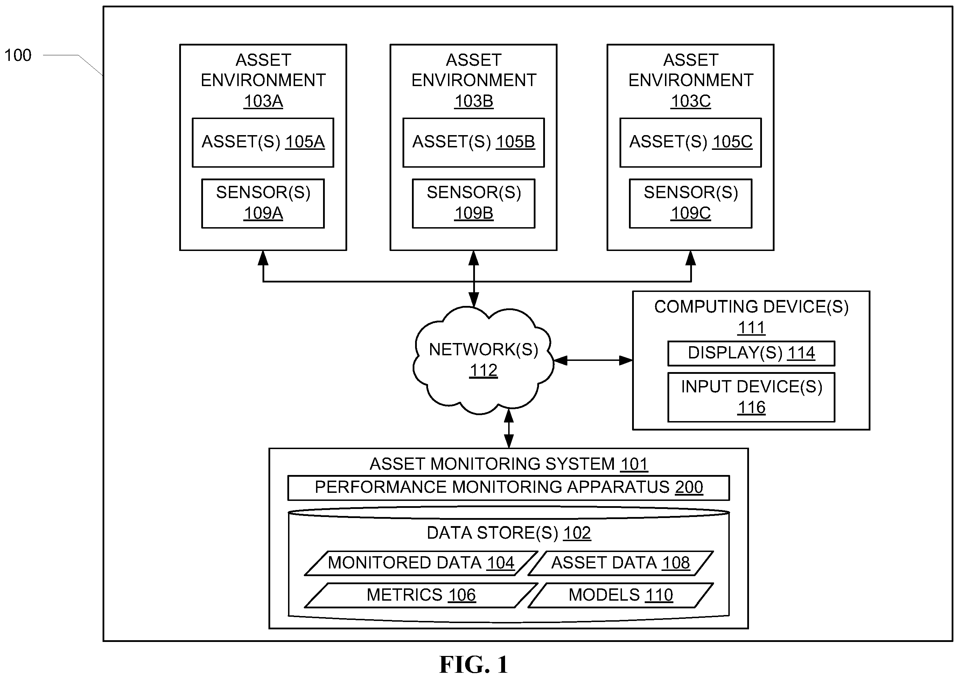

FIG. 1 illustrates a block diagram of a system that may be specially configured within which embodiments of the present disclosure may operate. Specifically, FIG. 1 depicts an example system 100. As illustrated, the system 100 includes an optional computing device 111 and an asset monitoring system 101 that monitors asset(s) of a plurality of environments, specifically environments 103A, 103B, and 103C, each environment including one or more asset(s), specifically asset(s) 105A, 105B, and 105C respectively, and optionally one or more senso(s) associated with each asset, specifically sensor(s) 109A, 109B, and 109C respectively. The sensor 109A, sensor 109B, and/or sensor 109C may each be representative of a plurality of sensors, as will be appreciated. In one example embodiment, the asset 105A may be associated with the sensor 109A that includes at least a first sensor and a second sensor. The asset 105A, asset 105B, and/or asset 105C may each be representative of a plurality of assets, as will be appreciated. For example, the asset 105A may be representative of a plurality of assets at the asset environment 103A. The asset environment 103A, asset environment 103B, and/or asset environment 103B may be representative of a plurality of environments, as will be appreciated.

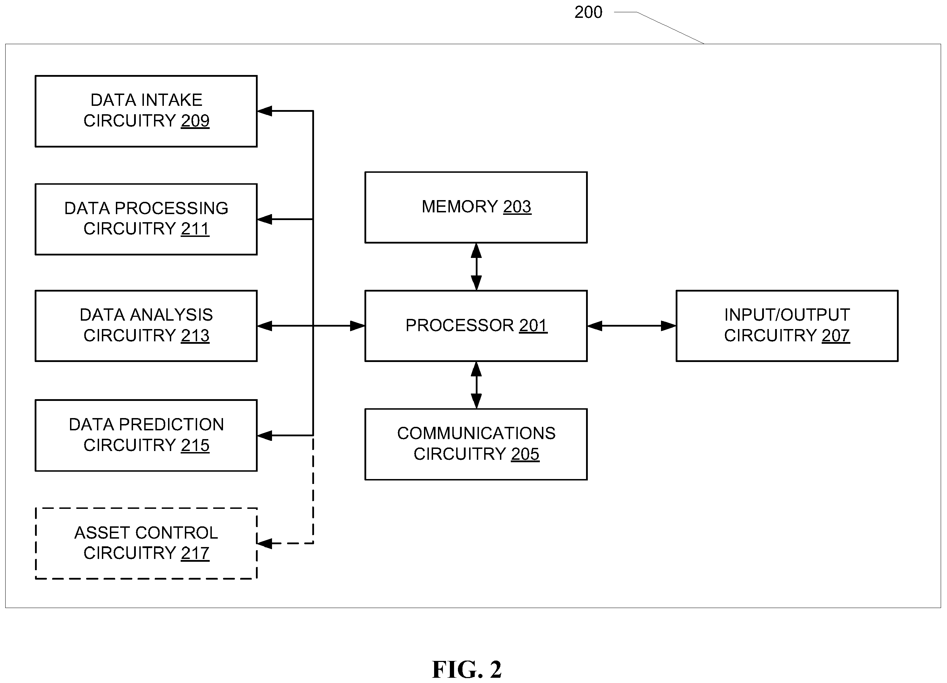

In some embodiments, the asset monitoring system 101 is embodied as, or includes one or more, of a performance monitoring apparatus 200 (e.g., as further illustrated in FIG. 2 and described herein). Various applications and/or other functionality may be executed in the asset monitoring system 101 and/or performing monitoring apparatus 200 according to various embodiments.

In some embodiments, the asset monitoring system 101 includes, but is not limited to, the one or more performance monitoring apparatuses 200 and one or more data stores 102. The various data in the data store 102 may be accessible to one or more of the asset monitoring system 101, the performance monitoring apparatus 200, and the computing device 111. The data store 102 may be representative of a plurality of data stores 102 as can be appreciated. The data stored in the data store 102, for example, is associated with the operation of the various applications, apparatuses, and/or functional entities described herein. The data stored in the data store 102 may include, for example, monitored data 104, metrics 106, asset data 108, and/or models 110.

As described herein, the monitored data 104 may include electronically managed data representing a measured value associated with operation of an asset at a particular timestamp. In some embodiments, the measured value is generated by the sensor 109A, sensor 109B, sensor 109B, or other sensor(s) based at least in part on a reading of one or more properties, conditions, qualities, or states of an asset and/or an asset environment in which the asset is located. In some embodiments, the asset monitoring system 101 and/or performance monitoring apparatus 200 receives the monitored data 104 from the sensor 109A, sensor 109B, sensor 109C, or other sensors, and stores the monitored data 104 at the data store 102. In some embodiments, the monitored data 104 is stored in association with one or more of the sensor from which the monitored data 104 was received, the asset to which the monitored data 104 corresponds, the asset environment at which the asset is located, and potentially other factors. In some embodiments, "stored in association" refers to storage of data in association with one or more data objects that are representative of an asset or other functional entity. For example, the data store 102 may store monitored data 104 in association with one or more of a first identifier corresponding to a sensor, a second identifier corresponding to an asset, a third identifier corresponding to an asset environment, and potentially other identifiers.

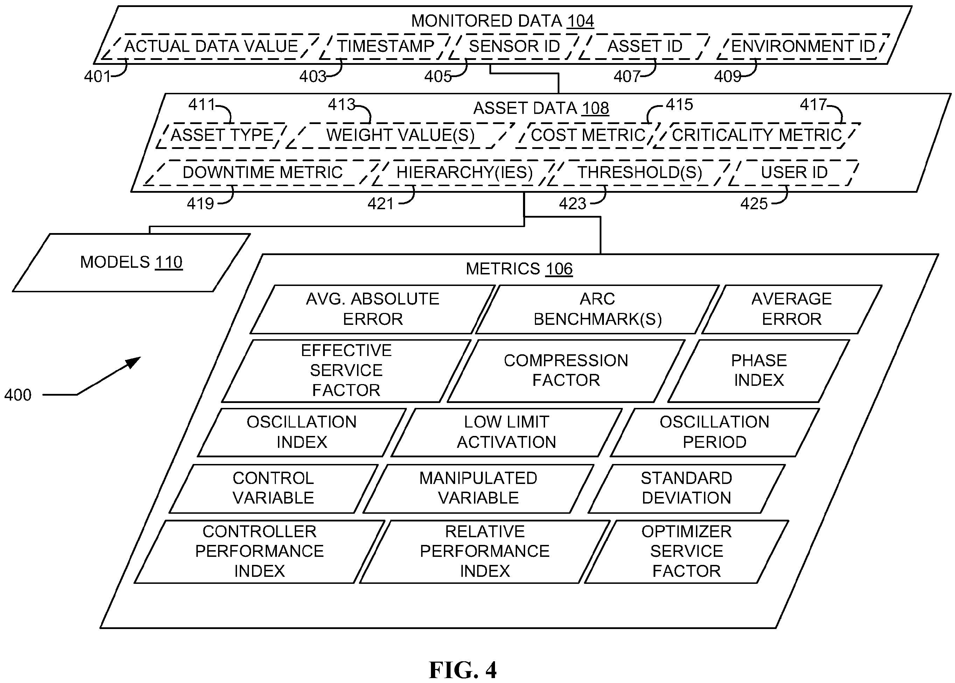

In some embodiments, the metrics 106 include performance metrics as described herein. Further non-limiting examples of performance metrics that may be embodied as metrics 106 include average absolute error (AAE), asset risk consultant (ARC) benchmark 2, ARC benchmark 3, ARC benchmark 4, average error, compression factor, coefficient of variation, effective service factor, error due to stiction, error standard deviation, integrated absolute value (IAE) over an hour, instrument availability, key control loop performance percent (%), monetary benefit, nonlinearity index (NLI), normalized standard deviation output (OP), normalized standard deviation process value (PV), normalized standard deviation setpoint (SP), number of rate of change (ROC) violations, number of spikes, OP changes in manual, oscillation index, percent (%) disposable, percent (%) error due to stiction, percent (%) not required, percent (%) saturation, percent (%) standard deviation, percent (%) time selected, relative performance index, service factor, standard deviation OP, standard deviation PV, standard deviation SP, stiction, valve reversal per hour, valve travel index over an hour, high limit activation, limit changes, limit tracking, low limit activation, optimization time, model quality index, phase index, standard deviation, steady state (SS) limit giveup, control variable service factor, control variable effective service factor, manipulated variable service factor, manipulated variable effective service factor, control variable limit give-up, control variable relative performance index, optimizer service factor, time at move size limit, and combinations thereof (e.g., see also, FIG. 4 and description herein).

In some embodiments, the metrics 106 include metrics generated based at least in part on one or more performance metrics (e.g., as described herein). Non-limiting examples of the metrics generated based at least in part on one or more performance metrics include normalized performance metrics, aggregated performance metrics, aggregated performance metrics, and importance-weighted performance metrics. In some embodiments, the metrics 106 include values of performance metrics (e.g., or metrics derived therefrom) and associations between the values of performance metrics and one or more of the corresponding monitored data 104 and the corresponding asset 105. For example, for a particular asset, the metrics 106 may include a value for each of a plurality of performance metrics for the particular asset (e.g., generated based at least in part on corresponding monitored data 104), a value for each of a plurality of normalized performance metrics generated based at least in part on the values of the plurality of performance metrics, a value of aggregated performance metric generated based at least in part on the values of the plurality of normalized performance metrics, and a value of importance-weighted performance metric generated based at least in part on the value of the aggregated performance metric. In some embodiments, the stored values of metrics 106 include one or more of a timestamp, an environment identifier, an asset identifier, a monitored datum(a) identifier, a sensor identifier, and historical values of the associated metric 106 (e.g., associated with one or more of the previously listed identifiers).

In some embodiments, the metrics 106 include one or more normalization functions that generate a normalized value of a metric based at least in part on one or more values of the metric (e.g., when the normalization function is executed by corresponding circuitry or other computing elements described herein). For example, the metrics 106 may include a performance metric of percent (%) error due to stiction and a normalization function for the percent error due to stiction. Continuing the example, the normalization function may include dividing a value of the percent (%) error due to stiction by a maximum value of the percent (%) error due to stiction (e.g., the maximum value being stored in the metrics 106 or elsewhere at the data store 102, such as in asset data 108).

In some embodiments, the asset data 108 includes data related to the identification, monitoring, and management of assets. Any of the asset data 108, or any subset or combination thereof, may be used as an input to the various processes, functions, and operations described herein. In some embodiments, for each asset, the asset data 108 may include one or more of an asset name for an asset, one or more identifiers for the asset, one or more asset types with which the asset is associated, a description for the asset, a physical location of the asset, and a network location at which the asset (e.g., or sensor(s) associated therewith) may be monitored and/or controlled. In some embodiments, the asset data 108 may include one or more of an age of the asset, one or more current and/or historical maintenance reports for the asset, one or more entities responsible for the asset (e.g., performance monitoring apparatus, sub-systems, users, and/or the like), and one or more responsibilities, privileges, permissions, and/or scope of control levels for the one or more entities.

In some embodiments, for each asset, the asset data 108 may include one or more associations between the asset and one or more normalization functions with which the asset is associated (e.g., and/or associations between the one or more normalization assets and one or performance metric with which the asset is associated). In some embodiments, the asset data 108 may include one or more values for one or more thresholds, setpoints, other reference data objects upon which upon which normalization functions, poor performance factor determination processes, recommended mitigation action generation processes, and/or other computations or processes may be at least partially based. In one example, the asset data 108 may include normalization function reference values, such as one or more of a maximum value of a performance metric, minimum value of a performance metric, or predetermined and/or user-selected threshold value of a performance metric.

In some embodiments, the asset data 108 may include one or more importance factors for the asset. In some embodiments, the asset data 108 may include one or more cost metrics for the asset. In some embodiments, the asset data 108 may include one or more criticality metrics for the asset. In some embodiments, the asset data 108 may include one or more downtime metrics for the asset. In some embodiments, the asset data 108 may include one or more sampling frequencies for one or more sensors associated with the asset (e.g., a sampling frequency at which readings for generating monitored data 104 are collected). In some embodiments, the asset data 108 may include one or more indications of a position of the asset in an environment hierarchy, such as a hierarchy of assets at a particular processing plant.

In some embodiments, for each asset, the asset data 108 may include one or more rankings with which the asset is associated. In some embodiments, the asset data 108 may include a particular rank of the asset within a particular ranking. In some embodiments, the asset data 108 may include metadata associated with the ranking. Non-limiting examples of the metadata include, but are not limited to, creation timestamp, representative period timestamp, environment identifier, asset identifier(s), and responsible entity identifier(s). In some embodiments, the asset data 108 may include current and historical positions of the asset in a plurality of rankings. In some embodiments, the asset data 108 may include trends and/or patterns associated with the current and/or historical position(s) of the asset in one or more rankings. In some embodiments, the ranking and/or data related to the ranking are stored, additionally or alternatively, in the metrics 106.

In some embodiments, for each asset and/or asset type, the asset data 108 may include one or more potential poor performance factors. In some embodiments, the asset data 108 may include one or more causal relationships or other associations between the poor performance factor and one or more values of one or more metrics 106. In some embodiments, for each asset and/or asset type, the asset data 108 may include one or more recommended mitigation actions for the poor performance factor. In some embodiments, the asset data 108 may include causal relationships or other associations between the recommended mitigation action and the poor performance factor and/or value(s) of one or more metrics 106 associated with the poor performance factor.

In some embodiments, the models 110 may include, but are not limited to, models for generating determinations and predictions based at least in part on data associated with one or more assets. In some embodiments, the models 110 may include one or more models for determining one or more poor performance factors, as described herein. In some embodiments, the models 110 may include one or more models for generating recommended mitigation actions, as described herein. In some embodiments, the models 110 may include one or more models for generating threshold values or other reference values used in processes and operations described herein, such as performance metric normalization, determination of performance factors, and/or generation of recommended mitigation actions. In some embodiments, the models 110 may include models for determining one or more metrics 106 that are predictive for evaluating performance of a particular asset or particular asset type. In some embodiments, the models 110 may process historical data associated with one or more assets to generate various outputs described herein, such as a determination of one or more metrics 106 that are predictive for performance of an asset or asset type, one or more poor performance factors for a poor-performance asset or asset type, and/or one or more recommend mitigation actions for a poor-performance asset or asset type. In some embodiments, the models 110 may include configurable settings, conditions, operating modes, and/or other properties, such as model parameters, hyperparameters, training datasets, and/or validation datasets. In some embodiments, the models 110 include one or more settings for controlling outputted data based at least in part on one or more factors including, but not limited to, asset type, asset environment, asset criticality, asset cost, asset downtime, asset user (e.g., or properties thereof, such as responsibilities, privileges, level of scope, and/or the like), and process or product with which the asset is associated (e.g., including properties thereof, such as process or product completion time, resource consumption requirements, budgetary requirements, efficiency requirements, and/or the like). In some embodiments, the models 110 include configurable settings for controlling output formats, such as settings for generating rankings (e.g., ranking size, ranking-associated location(s), ranking-associated asset type(s), and/or the like). In some embodiments, the models 110 include rules, heuristics, and/or other policies that influence how a model processes performance metrics and/or other data when performing processes or operations described herein, such as determining poor performance factors or generating recommended mitigation actions. In some embodiments, the models 110 may include a particular model for generating outputs associated with operating conditions or other factors of the first asset environment 103A, the second asset environment 103B, the third asset environment 103C, and additional asset environments. Non-limiting examples of the operating conditions or other factors include temperature, humidity, pressure, pH, atmospheric composition (e.g., oxygen concentration, nitrogen concentration, and/or the like), radiation, safety requirements, processing speeds, processing volume (e.g., batch size, throughput, and/or the like), human capital schedules, and maintenance schedules.

In some embodiments, the sensor(s) and/or the asset(s) in each environment is/are either or both communicable with the asset monitoring system 101. In some embodiments, the asset(s) 105A, 105B, and/or 105C, the sensor(s) 109A, 109B, and/or 109C, the asset monitoring system 101, the performance monitoring apparatus 200, and/or the computing device 111 are communicable over one or more communications network(s), for example the communications network(s) 112.

It should be appreciated that the communications network 112 in some embodiments is embodied in any of a myriad of network configurations. In some embodiments, the communications network 112 embodies a public network (e.g., the Internet). In some embodiments, the communications network 112 embodies a private network (e.g., an internal, localized, and/or closed-off network between particular devices). In some other embodiments, the communications network 112 embodies a hybrid network (e.g., a network enabling internal communications between particular connected devices and external communications with other devices). The communications network 112 in some embodiments may include one or more base station(s), relay(s), router(s), switch(es), cell tower(s), communications cable(s) and/or associated routing station(s), and/or the like. In some embodiments, the communications network 112 includes one or more user-controlled computing device(s) (e.g., a user owner router and/or modem) and/or one or more external utility devices (e.g., Internet service provider communication tower(s) and/or other device(s)).

Each of the components of the system communicatively coupled to transmit data to and/or receive data from one another over the same or different wireless or wired networks embodying the communications network 112. Such configuration(s) include, without limitation, a wired or wireless Personal Area Network (PAN), Local Area Network (LAN), Metropolitan Area Network (MAN), Wide Area Network (WAN), and/or the like. Additionally, while FIG. 1 illustrate certain system entities as separate, standalone entities communicating over the communications network 112, the various embodiments are not limited to this particular architecture. In other embodiments, one or more computing entities share one or more components, hardware, and/or the like, or otherwise are embodied by a single computing device such that connection(s) between the computing entities are over the communications network 112 are altered and/or rendered unnecessary. For example, in some embodiments, an asset includes one or more sensor(s) for monitoring said asset, such that separation of the asset and sensor(s) is not required.

In some embodiments, each asset performs a particular operational function within its corresponding environment. Such an environment may embody any physical space that the asset may be located within or affect, such as a warehouse, a residence, an office, an outdoor space, and/or the like. Each asset may embody a component of a large system, such that the system is defined by a plurality of interoperable assets. In one example context where the environment 103A includes an HVAC system, for example, the asset 105A may embody a valve, pump, damper, and/or the like, that performs a particular function within the HVAC system. Alternatively, in one example context where the asset environment 103B includes an individual asset, for example, the asset(s) 105B may embody only the individual asset.

An asset performs in accordance with one or more particular values set for configurable operational aspects of the asset. For example, in some embodiments, an asset operates based at least in part on a data value set for a position setting embodying an operational aspect of an asset, a speed setting embodying an operational aspect of the asset, and/or the like. In one example context, a position setting for a valve is configurable that alters how "open" the valve is and how much of a fluid may pass via the valve (e.g., on an absolute or proportional scale). In this regard, an asset may function differently based at least in part on the data value set for such particular operational aspect(s). In some embodiments, the asset data 108 may include the one or more particular values sets for operational aspects of the asset.

The data values for such configurable operational aspects are set in any of a myriad of ways. In some embodiments, the operational aspects are set to particular values via one or more command(s) that indicate that an asset should update its operation in accordance with a new value for a particular operational aspect. The recommended mitigation actions described herein may at least partially embody a command, or plurality thereof. In some embodiments, the command(s) are initiated via determination(s) performed by the asset itself or an associated system. Alternatively or additionally, in some embodiments, such command(s) are determined and/or initiated via an external system, such as the asset monitoring system 101 or the computing device 111. In some such embodiments, the external system may coordinate multiple assets to operate cooperatively to perform a higher level function (e.g., set a temperature of a particular environment, operate ventilation in the environment, and/or the like).

The sensor(s) associated with a particular asset may monitor data associated with one or more operational aspect(s) of an asset as the asset operates within the environment. The sensor(s) may generate monitored data 104 based at least in part on readings of the operational aspect(s) of the asset. For example, in some embodiments, the sensor(s) 109A detect the current operational value for a particular operational aspect at which the asset 105A is currently operating. Similarly, the sensor(s) 109B, detect the current operational value for a particular operational aspect at which the asset 105B is currently operating. In this regard, the sensor(s) associated with an asset may detect the current operational value for a particular operational aspect as the asset is progressing towards or away from a predetermined or expected value for an operational aspect of the asset. In some embodiments, the sensor(s) generate monitored data 104 and transmit the monitored data 104 to the asset monitoring system 101 for processing. Additionally or alternatively, in some embodiments, the asset monitoring system 101 receives monitored data 104 from each asset itself. In some embodiments, the monitored data 104 transmitted by the sensor(s) includes a current or historical timestamp associated with the timing of the sensor(s) reading the associated operational aspect of the asset. In some embodiments, the monitored data 104 includes one or more identifiers including, but not limited to, asset identifier, asset type identifier, and asset environment identifier.

The asset monitoring system 101 includes any number of computing device(s) that perform one or more function(s) for commanding an asset to perform in accordance with particular parameters, and/or receiving data associated with such operation for purposes of outputting performance metric(s), ranking(s) of assets and/or related data, identifications of poor performance asset(s), poor performance factor(s), and/or recommended mitigation actions. In some embodiments, the asset monitoring system 101 includes a first sub-system embodying an asset command system and a second sub-system embodying an asset performance monitoring system. In some other embodiments, a separate system from the asset monitoring system 101 performs the function(s) for determining poor performance factors, generating recommended mitigation actions, and/or performing recommended mitigation actions (e.g., an external system separate from an asset performance monitoring system embodying the asset monitoring system 101).

In some embodiments, the asset monitoring system 101 may receive monitored data 104 associated with the asset(s) 105A, asset(s) 105B, and/or asset(s) 105C, and potentially other assets, from the associated sensors. In some embodiments, the asset monitoring system 101 may generate, for each of the assets, a plurality of metrics 106 using the associated monitored data 104 and asset data 108. The plurality of metrics may include, for example, performance metrics that indicate a level of performance of the corresponding asset for a particular operational aspect. In some embodiments, the asset monitoring system 101 may perform one or more normalization operations to generate, for each of the assets, a plurality of normalized performance metrics based at least in part on the associated performance metrics (e.g., and associated asset data 108). Each of the plurality of normalized performance metrics may indicate a level of performance of the asset in the corresponding operational aspect. For example, a particular normalized performance metric may indicate a level of deviation of the current value of the corresponding performance metric from a predetermined maximum value. In some embodiments, for each asset, the asset monitoring system 101 may generate an aggregated performance metric for the asset based at least in part on the corresponding plurality of normalized performance metrics. In one example, the aggregated performance metric includes an average of the plurality of normalized performance metrics. In some embodiments, for each asset, the asset monitoring system 101 may generate a weighted performance metric by multiplying the aggregated performance metric by one or more weight values, such as an importance factor for the asset.

In some embodiments, the asset monitoring system 101 may generate a ranking of the assets based at least in part on the aggregated performance metrics, and/or weighted performance metrics, associated therewith. The ordering of the assets in the ranking may indicate a level of poor performance for the assets. For example, a top-ranked entry of the ranking may indicate an asset determined to demonstrate the poorest level of performance as compared to other entries of the ranking. In the same example, a lowest-ranked entry of the ranking may indicate an asset determined to demonstrate the least-poor or best level of performance as compared to the other entries. In some embodiments, the ordered arrangement of assets in the ranking provides a comparative, type-agnostic indication of how poorly an asset may be performing in comparison to other assets based on asset-individualized, normalized determinations of poor performance that are indicated in the performance metrics from which the ranking is generated. In some embodiments, for one or more assets in the ranking, the asset monitoring system 101 may determine one or more poor performance factors based at least in part on one or more performance metrics (e.g., or metrics derived therefrom) of the asset, and, in at least one embodiment, asset data 108 associated with the asset. In some embodiments, the asset monitoring system 101 determines the poor performance factor(s) using one or more models 110, such as, for example, a hierarchical tree of threshold values for one or more performance metrics (e.g., or metrics derived therefrom).

In some embodiments, for one or more assets, the asset monitoring system 101 may generate one or more recommended mitigations actions based at least in part on the one or more poor performance factors associated with the asset and potentially other data, such as asset data 108 corresponding to the asset. The recommended mitigation action may correspond to an action that, when performed, mitigates the poor performance of the asset, or at least increases the probability of improving the level of performance of the asset (e.g., which may include a change in one or more metrics 106 associated with the asset). In some embodiments, the asset monitoring system 101 may generate the recommended mitigation action(s) using one or more models 110, such as a decision tree. In some embodiments, the asset monitoring system 101 generates and transmits a notification that indicates one or more of the ranking, one or more poor-performance assets thereof, one or more poor performance factors, one or more recommended mitigation actions, and potentially other data. In some embodiments, the asset monitoring system 101 transmits the notification to one or more computing devices 111, such as in the form of electronic mail, a network-accessible report, an SMS text message, a computer voice message, and/or an update to a graphical user interface. In some embodiments, the asset monitoring system 101 generates a graphical user interface based at least in part on one or more rankings, one or more poor performance assets, one or more poor performance factors, and/or one or more recommended mitigation actions. The asset monitoring system 101 may provide the graphical user interface to one or more computing devices 111.

In some embodiments, the asset monitoring system 101 automatically, and/or in response to user input from a computing device 111, performs one or more recommended mitigation actions. For example, the asset monitoring system 101 (or a separate command system) generates and/or transmits instructions or requests embodying commands for altering the operation of the asset based at least in part on the recommended mitigation action. In some embodiments, the asset monitoring system 101 (or a separate command system) generates and transmits a command to an asset to cause the asset to begin updating an operational value towards a commanded target value represented in the command. The asset monitoring system 101 (or a separate command system) may generate such command(s) based at least in part on data-driven determination(s), a predetermined procedure, and/or the like. It will be appreciated that such commands may be generated and/or transmitted to one or more asset(s) in any of a myriad of known manners.

In some embodiments, the asset monitoring system 101 includes or is embodied by one or more separate sub-systems. For example, in some embodiments, the asset monitoring system 101 includes a first sub-system that generates, transmits, and/or otherwise performs controlling of operational aspects of one or more asset(s). Similarly, in some such embodiments, the asset monitoring system 101 includes a second sub-system that performs performance monitoring for one or more asset(s) within one or more environment(s).

In some embodiments, the asset monitoring system 101 embodies one or more cloud system(s) located remotely from one or more of the environments 103A, 103B, and/or 103C. Alternatively or additionally, in some embodiments, the asset monitoring system 101 embodies one or more on-premises systems located within the environments 103A, 103B, and/or 103C. Alternatively or additionally still, in some embodiments, the asset monitoring system 101 embodies a sub-system or component of an asset itself, for example one or more of the asset(s 105A, 105B, and/or 105C.

In some embodiments, the system 100 includes an additional and/or alternative building management system. In some embodiments, the building management system generates or receives commands for one or more assets, and transmits or executes the commands to facilitate an operational change of an asset. In some embodiments, a separate building management system is associated with each of the environments 103A, 103B, and 103C. In this regard, the building management system may receive and/or execute commands associated with only the assets within the corresponding environment. In some embodiments, a single building management system is associated with all of the environments 103A, 103B, and 103C. In some embodiments, the asset monitoring system 101 retrieves certain data-for example the monitored data 104 and/or asset data 108 associated with one or more asset(s)-via the building management system.

The computing device 111 includes one or more computing device(s) accessible to an end user. In some embodiments, the computing device 111 includes a personal computer, laptop, smartphone, tablet, Internet-of-Things enabled device, smart home device, virtual assistant, alarm system, workstation, work portal, and/or the like. The computing device 111 may include one or more displays 114, one or more visual indicator(s), one or more audio indicator(s) and/or the like that enables output to a user associated with the computing device 111. For example, in some embodiments, the asset monitoring system 101 transmits a notification comprising or embodying one or more ranking of assets, poor-performance asset indications, poor performance factors, and recommended mitigation assets to the computing device 111 for outputting. In some embodiments, the computing device 111 includes one or more input devices 116 for receiving user inputs, such as commands to perform a recommended mitigation action, generate a ranking, adjust a ranking, adjust a process for generating a metric 106, and/or adjust an importance factor, a criticality metric, a downtime metric, and/or a cost metric. In some embodiments, the input device 116 include one or more buttons, cursor devices, touch screens, including three-dimensional or pressure based touch screens, camera, finger print scanners, accelerometer, retinal scanner, gyroscope, magnetometer, and/or other input devices.

FIG. 2 illustrates a block diagram of an example apparatus that may be specially configured in accordance with at least some example embodiments of the present disclosure; Specifically, FIG. 2 depicts an example performance monitoring apparatus 200 ("apparatus 200") specially configured in accordance with at least some example embodiments of the present disclosure. In some embodiments, the asset monitoring system 101 and/or a portion thereof is embodied by one or more system(s), such as the apparatus 200 as depicted and described in FIG. 2. The apparatus 200 includes processor 201, memory 203, communications circuitry 205, input/output circuitry 207, data intake circuitry 209, data processing circuitry 211, data analysis circuitry 211, data prediction circuitry 215, and asset control circuitry 217. In some embodiments, the apparatus 200 is configured, using one or more of the processor 201, memory 203, communications circuitry 205, input/output circuitry 207, data intake circuitry 209, data processing circuitry 211, data analysis circuitry 213, data prediction circuitry 215, and/or asset control circuitry 217, to execute and perform the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein interchangeably. In one embodiment, these functions, operations, and/or processes may be performed on data, content, information, and/or similar terms used herein interchangeably. In this regard, the apparatus 200 embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively or additionally, in some embodiments, other elements of the apparatus 200 provide or supplement the functionality of another particular set of circuitry. For example, the processor 201 in some embodiments provides processing functionality to any of the sets of circuitry, the memory 203 provides storage functionality to any of the sets of circuitry, the communications circuitry 205 provides network interface functionality to any of the sets of circuitry, and/or the like.

In some embodiments, the processor 201 (and/or co-processor or any other processing circuitry assisting or otherwise associated with the processor) is/are in communication with the memory 203 via a bus for passing information among components of the apparatus 200. In some embodiments, for example, the memory 203 is non-transitory and may include, for example, one or more volatile and/or non-volatile memories. In other words, for example, the memory 203 in some embodiments includes or embodies an electronic storage device (e.g., a computer readable storage medium). In some embodiments, the memory 203 is configured to store information, data, content, applications, instructions, or the like, for enabling the apparatus 200 to carry out various functions in accordance with example embodiments of the present disclosure. In some embodiments, the memory 203 is embodied as, or communicates with, a data store 102 as shown in FIG. 1 and described herein.

The processor 201 may be embodied in a number of different ways. For example, in some example embodiments, the processor 201 includes one or more processing devices configured to perform independently. Additionally or alternatively, in some embodiments, the processor 201 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the apparatus 200, and/or one or more remote or "cloud" processor(s) external to the apparatus 200.

In an example embodiment, the processor 201 is configured to execute instructions stored in the memory 203 or otherwise accessible to the processor. Alternatively or additionally, the processor 201 in some embodiments is configured to execute hard-coded functionality. As such, whether configured by hardware or software methods, or by a combination thereof, the processor 201 represents an entity (e.g., physically embodied in circuitry) capable of performing operations according to an embodiment of the present disclosure while configured accordingly. Alternatively or additionally, as another example in some example embodiments, when the processor 201 is embodied as an executor of software instructions, the instructions specifically configure the processor 201 to perform the algorithms embodied in the specific operations described herein when such instructions are executed.

As one particular example embodiment, the processor 201 is configured to perform various operations associated with outputting indications of poor asset performance (e.g., rankings of assets, indication of a poor-performance asset, and/or the like), poor performance factors, and/or recommended mitigation actions associated with an asset based at least in part on received data associated with operation of an asset. In some embodiments, the processor 201 includes hardware, software, firmware, and/or a combination thereof, that receives one or more portions of command data and/or one or more portions of feedback data associated with operation of a particular asset. Additionally or alternatively, in some embodiments, the processor 201 includes hardware, software, firmware, and/or a combination thereof, that determined a command-feedback difference value and/or an absolute data value. Additionally or alternatively, in some embodiments, the processor 201 includes hardware, software, firmware, and/or a combination thereof, that outputs at least one ranking of assets, at least one poor performance asset, at least one poor performance factor, and/or at least one recommended mitigation action.

In some embodiments, the apparatus 200 includes input/output circuitry 207 that provides output to the user and, in some embodiments, to receive an indication of a user input. For example, the input/output circuitry 207 provides output to and receives input from one or more computing devices (e.g., computing devices 111 shown in FIG. 1 and described herein). In some embodiments, the input/output circuitry 207 is in communication with the processor 201 to provide such functionality. The input/output circuitry 207 may comprise one or more user interface(s) and in some embodiments includes a display that comprises the interface(s) rendered as a web user interface, an application user interface, a user device, a backend system, or the like. In some embodiments, the input/output circuitry 207 also includes a keyboard, a mouse, a joystick, a touch screen, touch areas, soft keys a microphone, a speaker, and/or other input/output mechanisms. The processor 201 and/or input/output circuitry 207 comprising the processor may be configured to control one or more functions of one or more user interface elements through computer program instructions (e.g., software and/or firmware) stored on a memory accessible to the processor (e.g., memory 203, and/or the like). In some embodiments, the input/output circuitry 207 includes or utilizes a user-facing application to provide input/output functionality to a client device and/or other display associated with a user.

In some embodiments, the apparatus 200 includes communications circuitry 205. The communications circuitry 205 includes any means such as a device or circuitry embodied in either hardware or a combination of hardware and software that is configured to receive and/or transmit data from/to a network and/or any other device, circuitry, or module in communication with the apparatus 200. In this regard, in some embodiments the communications circuitry 205 includes, for example, a network interface for enabling communications with a wired or wireless communications network, such as the network 112 shown in FIG. 1 and described herein. Additionally or alternatively in some embodiments, the communications circuitry 205 includes one or more network interface card(s), antenna(s), bus(es), switch(es), router(s), modem(s), and supporting hardware, firmware, and/or software, or any other device suitable for enabling communications via one or more communications network(s). Additionally or alternatively, the communications circuitry 205 includes circuitry for interacting with the antenna(s) and/or other hardware or software to cause transmission of signals via the antenna(s) or to handle receipt of signals received via the antenna(s). In some embodiments, the communications circuitry 205 enables transmission to and/or receipt of data from computing devices (e.g., such as computing devices 111), one or more asset(s) (e.g., such as assets 105A, 105B, 105C shown in FIG. 1 and described herein) or accompanying sensor(s) (e.g., such as sensors 109A, 109B, 109C), and/or other external computing devices in communication with the apparatus 200.

The data intake circuitry 209 includes hardware, software, firmware, and/or a combination thereof, that supports receiving data associated with operation of an asset, such as monitored data from one or more sensors. For example, in some embodiments, the data intake circuitry 209 includes hardware, software, firmware, and/or a combination thereof, that captures and/or receives monitored data associated with one or more asset(s). The data intake circuitry 209 may communicate with an asset or a sensor associated therewith to receive such monitored data. The data intake circuitry 209 may aggregate monitored data for an asset, such as, for example, aggregated monitored data from a plurality of sensors associated with the asset. The data intake circuitry 209 may aggregate monitored data for an asset for a predetermined interval such as 1 second, 30 seconds, 2 minutes, 1 hour, 24 hours, 1 week, or any suitable interval. The data intake circuitry 209 may receive or collect monitored data from a sensor at a predetermined sampling frequency. In one example, the data intake circuitry 209 receives monitored data from a first sensor at a first sampling frequency and monitored data from a second sensor at a second sampling frequency that is greater or lesser than the first sampling frequency. Additionally or alternatively, in some embodiments, the data intake circuitry 209 includes hardware, software, firmware, and/or a combination thereof, that captures and/or receives asset data associated with one or more asset(s). The data intake circuitry 209 may communicate with an asset monitoring system, the asset itself, and/or identify the asset data command(s) transmitted to an asset, a computing device, and/or a local or remote computing environment (e.g., including a computing environment embodying an asset data store, such as the data store 102 shown in FIG. 1 and described herein).

Additionally or alternatively, in some embodiments, the data intake circuitry 209 includes hardware, software, firmware, and/or a combination thereof, that requests data from one or more computing device(s), for example from the asset or a sensor, and receives the data in response. Additionally or alternatively, in some embodiments, the data intake circuitry 209 includes hardware, software, firmware, and/or a combination thereof, that identifies an asset type associated with a particular asset. Additionally or alternatively, in some embodiments, the data intake circuitry 209 includes hardware, software, firmware, and/or a combination thereof, that maintains one or more data store(s) including historically received portions of data, including, but not limited to, historical metrics of one or more assets, historical asset data, historical monitored data, historical rankings of assets, historical models, and historical inputs and/or outputs of models (e.g., rankings, poor performance factors, recommended mitigation actions, and/or the like). In some embodiments, data intake circuitry 209 includes a separate processor, specially configured field programmable gate array (FPGA), and/or a specially programmed application specific integrated circuit (ASIC).

The data processing circuitry 211 includes hardware, software, firmware, and/or a combination thereof, that supports various functionality associated with processing monitored data and/or predicting data values (e.g., embodying data-driven insights) from monitored data and/or other particular received data associated with an asset. For example, in some embodiments, the data processing circuitry 211 includes hardware, software, firmware, and/or any combination thereof, that determines one or more performance metrics based at least in part on monitored data received associated with a particular asset (e.g., and potentially other data, such as asset data associated with the particular asset). Additionally or alternatively, in some embodiments, the data processing circuitry 211 includes hardware, software, firmware, and/or any combination thereof, that generates a normalized performance metric for a particular asset based at least in part on a performance metric for the particular asset, and potentially other data, such as a normalization algorithm, normalization model, and/or other normalization function associated with the performance metric and/or an asset type associated with the particular asset.

Additionally or alternatively, in some embodiments, the data processing circuitry 211 includes hardware, software, firmware, and/or any combination thereof, that generate an aggregated performance metric for an asset based at least in part on a plurality of normalized performance metrics for the asset. Additionally or alternatively, in some embodiments, the data processing circuitry 211 includes hardware, software, firmware, and/or any combination thereof, that generate a weighted performance metric for an asset based at least in part on an aggregated performance for the asset and a weight value, such as an importance factor for the asset or asset type associated therewith. In some embodiments, the data processing circuitry 211 includes a separate processor, specially configured field programmable gate array (FPGA), and/or a specially programmed application specific integrated circuit (ASIC).

The data analysis circuitry 213 includes hardware, software, firmware, and/or a combination thereof, that supports various functionality associated with generating and/or outputting rankings of assets. In some embodiments, the data analysis circuitry 213 includes hardware, software, firmware, and/or a combination thereof, that compares values of aggregated performance metrics for a plurality of assets and outputs a ranking of the assets based thereon. For example, the data analysis circuitry 213 may generate a ranking of assets in which the assets are ordered by decreasing aggregated performance metric such that a top-ranked entry of the ranking corresponds to an asset associated with a lowest level of determined performance (e.g., poorest-performance asset) and a bottom-ranked entry of the ranking corresponds to an asset associated with a highest level of determined performance (e.g., least-poor-performance asset or best-performance asset). Additionally or alternatively, in some embodiments, the data analysis circuitry 213 includes hardware, software, firmware, and/or a combination thereof, that compares monitored data and/or metrics of one or more ranked assets with one or more predetermined thresholds and outputs a corresponding indicator that represents whether the monitored data and/or metrics of the asset(s) exceed the predetermined threshold(s). In some embodiments, the data analysis circuitry 213 includes a separate processor, specially configured field programmable gate array (FPGA), and/or a specially programmed application specific integrated circuit (ASIC). In some embodiments, the data analysis circuitry 213 includes a separate processor, specially configured field programmable gate array (FPGA), and/or a specially programmed application specific integrated circuit (ASIC).

The data prediction circuitry 215 includes hardware, software, firmware, and/or a combination thereof, that supports various functionality associated with determining poor performance factors and/or generating recommended mitigation actions. In some embodiments, the data prediction circuitry 215 includes hardware, software, firmware, and/or a combination thereof, that supports various functionality associated with determining one or more poor performance factors for an asset based at least in part on one or more of performance metric(s) associated with the asset and/or other assets, normalized performance metric(s) associated with the asset and/or other asset(s), aggregated performance metric(s) associated with the asset and/or other asset(s), weighted performance metric(s) associated with the asset and/or other asset(s), asset type(s) associated with the asset, and environment, and/or properties thereof, within which the asset is located. In some embodiments, the data prediction circuitry 215 includes hardware, software, firmware, and/or a combination thereof, that supports various functionality associated with determining one or more recommended mitigation actions for an asset based at least in part on one or more performance factors associated with the asset and/or other asset(s), one or more of performance metric(s) associated with the asset and/or other asset(s), normalized performance metric(s) associated with the asset and/or other asset(s), aggregated performance metric(s) associated with the asset and/or other asset(s), weighted performance metric(s) associated with the asset and/or other asset(s), asset type(s) associated with the asset, environment, and/or properties thereof, within which the asset is located, and other asset data associated with the asset, such as a position of the asset in an environment hierarchy, a level of privilege(s), responsibility(ies), and/or scope of one or more users associated with the asset, a cost metric for the asset, a downtime metric for the asset, a criticality metric for the asset, and/or a maintenance or human capital schedule associated with the asset. In some embodiments, the data prediction circuitry 215 includes hardware, software, firmware, and/or a combination thereof, that supports various functionality associated with accessing and executing models described herein (e.g., such as models 110 shown in FIG. 1), including, but not limited to, models for determining poor performance factor(s), models for generating recommended mitigation action(s), and potentially other models. In some embodiments, the data prediction circuitry 215 includes a separate processor, specially configured field programmable gate array (FPGA), and/or a specially programmed application specific integrated circuit (ASIC).

The optional asset control circuitry 217 includes hardware, software, firmware, and/or a combination thereof, that supports various functionality associated with generating and/or transmitting command(s) for controlling operational aspect(s) of at least one asset, such as may be embodied in various recommended mitigation actions described herein. In some embodiments, the asset control circuitry 217 includes hardware, software, firmware, and/or a combination thereof, that generates command that causes an asset to update one or more operational value(s) towards a commanded target value for particular operational aspect. Additionally or alternatively, in some embodiments, the asset control circuitry 217 includes hardware, software, firmware, and/or a combination thereof, that transmits a command to an asset. Additionally or alternatively, in some embodiments, the asset control circuitry 217 includes hardware, software, firmware, and/or a combination thereof, that derives command data from generated and/or transmitted command(s) associated with an asset. In some embodiments, the asset control circuitry 217 includes a separate processor, specially configured field programmable gate array (FPGA), and/or a specially programmed application specific integrated circuit (ASIC).

Additionally or alternatively, in some embodiments, two or more of the processor 201, memory 203, communications circuitry 205, input/output circuitry 207, data intake circuitry 209, data processing circuitry 211, data analysis circuitry 213, data prediction circuitry 215, and/or asset control circuitry 217 are combinable. Alternatively or additionally, in some embodiments, one or more of the sets of circuitry perform some or all of the functionality described associated with another component. For example, in some embodiments, two or more of the sets of circuitry 201-217 are combined into a single module embodied in hardware, software, firmware, and/or a combination thereof. Similarly, in some embodiments, one or more of the sets of circuitry, for example the data intake circuitry 209, the data processing circuitry 211, the data analysis circuitry 213, the data prediction circuitry 215, and/or the asset control circuitry 217, is/are combined with the processor 201, such that the processor 201 performs one or more of the operations described above with respect to each of these sets of circuitry 209-217.

### EXAMPLE DATA FLOWS AND DATA ARCHITECTURES OF THE DISCLOSURE

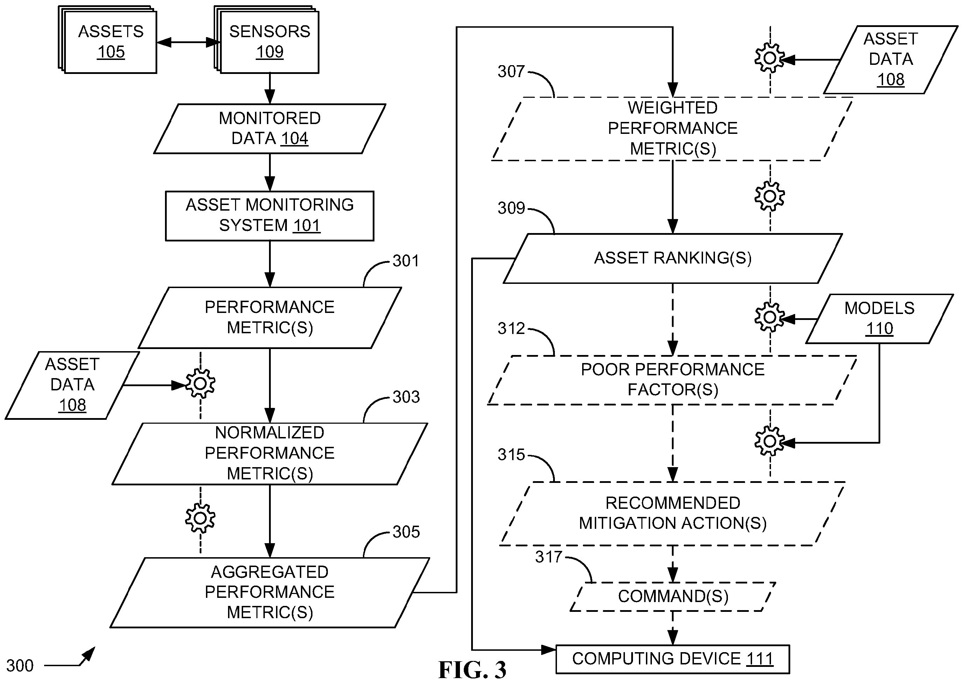

Having described example systems and apparatuses in accordance with embodiments of the present disclosure, example data flows and architectures of data in accordance with the present disclosure will now be discussed. In some embodiments, the systems and/or apparatuses described herein maintain data environment(s) that enable the data flows in accordance with the data architectures described herein. For example, in some embodiments, the systems and/or apparatuses described herein function in accordance with the data flow depicted in FIG. 3, and the data flows and data architectures depicted and/or described with respect to FIGS. 4-8 are performed or maintained via the asset monitoring system 101 embodied by an apparatus 200.

FIG. 3 illustrates an example data flow 300 in accordance with at least some example embodiments of the present disclosure. Specifically, FIG. 3 depicts a flow of data between the various computing devices depicted and described in FIG. 1.

As illustrated, in some embodiments, the data flow 300 includes transmission of monitored data 104 from one or more sensors 109 of one or more assets 105 to an asset monitoring system 101. In some embodiments, the asset monitoring system 101 receives or collects the monitored data 104 from the sensors 109 at one or more predetermined sampling frequencies. For example, the asset monitoring system 101 may receive first monitored data 104 from a first sensor 109 at a first sampling frequency and receive second monitored data 104 from a second sensor 109 at a second sampling frequency that may be greater than, less than, or equal to the first sampling frequency. Additionally or alternatively, in some embodiments, the asset monitoring system 101 obtains monitored data 104 from one or more data stores. In some embodiments, by obtaining monitored data 104 in substantially real-time, the asset monitoring system 101 provides for substantially real-time performance monitoring and ranking of asset performances, which may improve speed, efficiency, and quality of asset maintenance and industrial processes with which assets are associated.

In some embodiments, the asset monitoring system 101 receives monitored data 104 associated with assets of a particular grouping of assets, such as assets located in the same area of a facility, assets associated with production of the same good and/or same industrial process, assets associated with a particular schedule (e.g., maintenance schedule, production schedule, labor schedule, etc.), assets associated with a historical level of performance, or range thereof, such as historically poor performance assets, or combinations thereof. In some embodiments, the asset monitoring system 101 receives an input that indicates the grouping of assets to be monitored. In some embodiments, the asset monitoring system 101 determines one or more sensors 109 associated with assets of an asset grouping and initiates communication with the one or more sensors 109 to obtain monitored data 104 therefrom at one or more predetermined frequencies.

In some embodiments, the data flow 300 includes the asset monitoring system 101 generating one or more performance metrics 301 for each asset 105 based at least in part on the monitored data 104. In some embodiments, the asset monitoring system 101 generates the performance metric(s) 301 further based at least in part on asset data 108 associated with the respective asset 105. In some embodiments, the asset monitoring system 101 generates the performance metric(s) in association with a particular interval, such as 30 seconds, 1 minute, 1 hour, 12 hours, 1 day, 1 week, or any suitable interval. In some embodiments, the ability of the asset monitoring system 101 to generate performance metrics and performance-based asset rankings for a particular interval provides for improved specificity and understanding of asset behaviors, which may advantageously improve asset maintenance planning, life cycle monitoring, and resource allocation.

In some embodiments, the data flow 300 includes the asset monitoring system 101 generating one or more normalized performance metrics 303 for each asset 105 based at least in part on the respective performance metric(s) 301 for the asset 105. In some embodiments, the asset monitoring system 101 generates the normalized performance metric(s) 301 further based at least in part on asset data 108 associated with the respective asset 105 and/or other data associated with performance metric(s), such as a normalization algorithm, normalization model, and/or other normalization function.

In some embodiments, the data flow 300 includes the asset monitoring system 101 generating one or more aggregated performance metrics 305 for each asset 105 based at least in part on the respective normalized performance metrics 303 for the asset 105. In one example, the asset monitoring system may generate a weighted or unweighted average performance metric for each asset 105 based on corresponding normalized performance metrics 303. In some embodiments, by generating the aggregated performance metric 305, the asset monitoring system 101 provides a composite metric of normalized asset performance metrics such that performance levels for assets of same and varying type may be accurately compared at speed and scale.

In some embodiments, the data flow 300 optionally includes the asset monitoring system 101 generating one or more weighted performance metrics 307 based at least in part on the respective aggregated performance metric 305 for each asset 105 and a weight value from asset data 108 associated with the asset 105, such as an importance factor for the asset 105.

In some embodiments, the data flow 300 includes the asset monitoring system 101 generating one or more asset rankings 309 based at least in part on the respective aggregated performance metric 305, and/or importance-weighted metric, of each asset 105. In some embodiments, the ranking 309 indicates a level of poor performance for each asset 105. The asset monitoring system 101 may use the ranking 309 to generate various insights related to individual and aggregate levels of asset performance. The ability to generate accurate, type-agnostic assessments of asset performance may provide various advantages over previous asset monitoring techniques. For example, the asset monitoring system 101 may use the ranking 309 to more rapidly and/or accurately determine which of many type-varied assets requires the greatest and most immediate attention (e.g., for maintenance, servicing, diagnosis, and/or replacement operations). As another example, the asset monitoring system 101 may use the ranking 309 to generate accurate representations and visualizations of asset performance across a plant hierarchy that includes many assets of many asset types.

In some embodiments, the data flow 300 optionally includes the asset monitoring system 101 determining one or more poor performance factors 312 for one or more of the assets 105 in the ranking(s) using one or more models 110, and potentially other data, such as asset data 108. In one example, the asset monitoring system 101 determines one or more poor performance factors 312 for at least a top-ranked asset 105 of the ranking 309 (e.g., which may indicate a poorest-performing asset 105 from the plurality of assets 105 analyzed). In some embodiments, by automatically determining poor performance factors for poor performance assets, the asset monitoring system 101 may further expedite timely recognition and mitigation of asset issues, such as improper operating parameters, part malfunctions, and asset degradation.

In some embodiments, the data flow 300 optionally includes the asset monitoring system 101 generating one or more recommended mitigation actions 315 for one or more assets 105 using one or more models 110 and based at least in part on the one or more poor performance factors 312 determined for the asset 105, and potentially other data, such as asset data 108 associated with the asset 105 and/or corresponding performance metrics 301.

In some embodiments, the data flow 300 optionally includes the asset monitoring system 101 generating one or more commands 317 for performing, automatically or in response to user input, the one or more recommended mitigation actions 315. In some embodiments, the asset monitoring system 101 generates the asset monitoring system 101 based at least in part on the one or more recommended mitigation actions 315, the one or more performance factors 312, the corresponding performance metrics 301, and/or corresponding asset data 108.

In some embodiments, the data flow 300 includes the asset monitoring system 101 providing the one or more rankings 309 to one or more computing devices 111. For example, the asset monitoring system 101 may transmit the ranking(s) 309 to the computing device(s) 111 using one or more wired or wireless networks. In another example, the asset monitoring system 101 generates, and provides to the computing device(s) 111, a graphical user interface including the ranking(s) 309, and potentially other data, such as asset data 108 corresponding to one or more assets 105 from the ranking(s) 309. In some embodiments, the asset monitoring system 101 further provides, to the computing device(s) 111, one or more of the poor performance factors(s) 312, the recommended mitigation action(s) 315, and the command(s) 317.

FIG. 4 illustrates an example data architecture 400 in accordance with at least some example embodiments of the present disclosure. Specifically, FIG. 4 illustrates a data architecture 400 for a portion of monitored data, metrics, and asset data in accordance with at least some embodiments of the present disclosure. In this regard, any feedback data and/or command data received, transmitted, generated, and/or otherwise manipulated via the systems described herein may be architected in accordance with the depicted data architecture to include the particular data values therein. The monitored data, metrics, and asset data, contents thereof, shown in FIG. 4 and described herein are exemplary in nature, non-exhaustive and are provided to illustrate and describe exemplary aspects of the present systems and processes according to various embodiments.

As illustrated, the monitored data 104 includes an actual data value 401 and a timestamp 403. In some embodiments, the actual data value 401 represents an operational value captured and/or otherwise measured for a particular asset. In some embodiments, the actual data value 401 may represent, for example, a speed of an asset, a position of an asset, and/or the like, representing an actual configuration of the physical operation of the asset. It will be appreciated that the actual data value 401 may be updated as the asset updates its operation to progress an operational value towards a commanded target value for a particular operational aspect.

The monitored data 104 may include a timestamp 403. The timestamp 403 may be associated with the actual data value 401. In this regard, the timestamp 403 may indicate that the actual data value 401 was the current operational value of the operational aspect for the asset at the time indicated by the timestamp 403. In this regard, the monitored data 104 may represent the actual operational value for an operational aspect of the asset at the particular time indicated by the timestamp 403. It should be appreciated that a plurality of portions of monitored data 104 may be captured and/or stored, for example as a monitored data set. The monitored data set may define a timeseries of the data values for a particular operational aspect of the asset. In some embodiments, the monitored data set represents a timeseries of operational values for a particular operational aspect as the asset updates the current operational value towards a commanded target value. In some embodiments, the monitored data 104 is captured at a particular rate. For example, monitored data 104 may be captured at a sampling frequency defined by one or more controller(s), sensor(s), and/or the like. In this regard, the monitored data 104 may include a timestamp 403 representing the current time at which a particular value represented by the actual data value 401 is captured.

The monitored data 104 may include one or more identifiers, such as, for example, a sensor identifier 405, an asset identifier 407, and/or an asset environment identifier 409. The sensor identifier 405 may be associated with the particular sensor that generated the actual data value 401 of the monitored data 104. The asset identifier 407 may be associated with the particular asset monitored by the sensor. The asset environment identifier 409 may be associated with the particular asset environment in which the sensor and/or asset is/are located. In some embodiments, the asset monitoring system receives the monitor data 104 including a subset of the identifiers 405, 407, 409. In such embodiments, the asset monitoring system may perform one or more look-up operations to identify one or more identifiers not included. In such embodiments, the asset monitoring system may modify the monitored data 104 to include the additional identifier(s). In one example, the asset monitoring system receives monitor data 104 including an actual data value 401, a timestamp 403, and a sensor identifier 405. Continuing the example, the asset monitoring system performs one or more lookup processes in one or more data stores based at least in part on the identifier 405 and identifies an associated asset identifier 407 and an asset environment identifier 409. In this example, asset monitoring system may modify the monitored data to further include the asset identifier 407 and the asset environment identifier 409.

The asset data 108 may include data associated with a particular asset, including, but not limited to, an asset type 411, one or more weight values 413, one or more cost metrics 415, one or more criticality metrics 417, one or more downtime metrics 419, one or more asset hierarchies 421, one or more thresholds 423, and one or more user identifiers 425. The weight value(s) 413 may include importance weight values, volatility weight values, and other suitable values for configuring asset performance monitoring operations described herein. The asset hierarchy 421 may include a position of the asset within a hierarchy of assets at a particular location. The hierarchy 421 may indicate a level of criticality of the asset, a maintenance or service cost of the asset, one or more industrial or monetary benefits of the asset, a level of replaceability of the asset, and potentially other factors. The threshold(s) 423 can include values for predetermined thresholds, expected values, and reference values reference herein. In some embodiments, the asset monitoring system may adjust values of one or more thresholds 423 based at least in part on one or more of user inputs, performance metrics, asset rankings, poor performance factors, recommended mitigation actions, the cost metric 415, the criticality metric 417, the downtime metric 419, and combinations thereof. The user identifier 425 may indicate a user responsible for managing the asset. The user identifier 425 may include or indicate a level of privilege, a set of responsibilities, and/or a scope of duties for the associated user and pertaining to the particular associated asset, or asset type 411.

In some embodiments, based at least in part on the monitored data 104 (e.g., in particular, one or more identifiers therein), the asset monitoring system determines an asset, asset data 108 associated with the asset, and/or one or more models 110 associated with the asset or asset data 108. It will be understood that the value(s) of one or more asset data 108 components for a particular asset may differ for the asset depending on one or more factors, including, but not limited to, location of the asset, user(s) associated with the asset, industrial process associated with the asset, industrial product associated with the asset, and combinations of factors.

The models 110 may include poor performance factors and relationships between asset types 411, metrics 106, thresholds 423, and the poor performance factors. The models 110 may include potential mitigation actions and relationships between asset types 411, metrics 106, thresholds 423, poor performance factors, and the potential mitigation actions.

The metrics 106 may be associated with a particular asset or particular asset type (e.g., a first set of metrics may be used for monitoring assets of a first asset type, and a different, second set of metrics for monitoring assets of a second asset type). In some embodiments, the normalized performance metrics described herein advantageously enable the present systems and processes to compare and rank performances of assets of differing asset types. The metrics 106 may include any quantitative or qualitative measure of asset operational aspects or properties. The metrics 106 may further include values generated based at least in part on one or more quantitative or qualitative measure of asset operational aspects or properties. The metrics 106 may include performance metrics, normalized performance metrics, aggregated performance metrics, and/or weighted performance metrics.

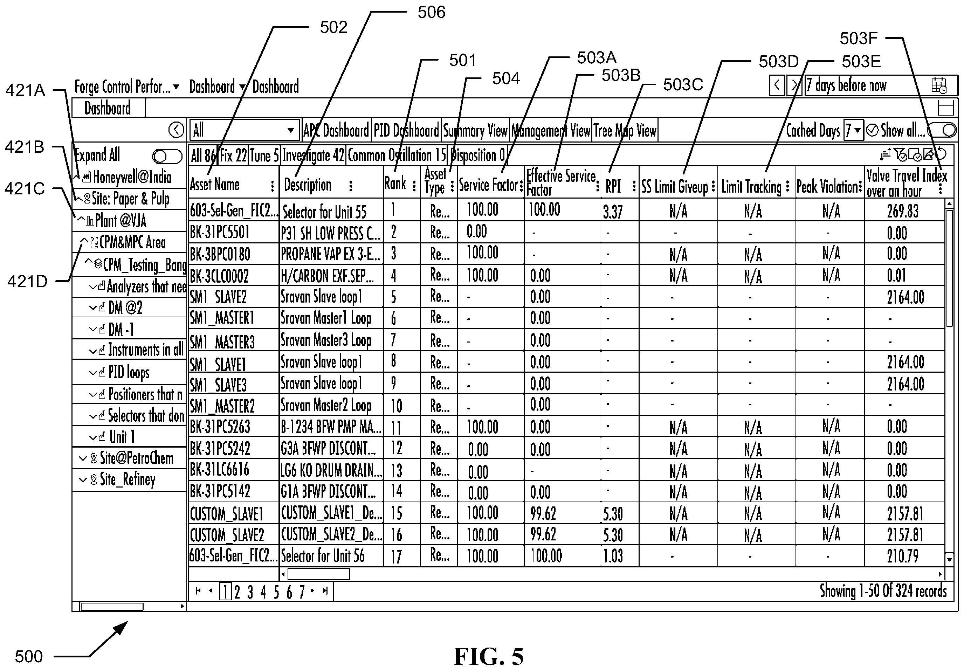

FIG. 5 illustrates an example graphical user interface 500 including a ranking of assets 501 based at least in part on asset performance in accordance with at least some example embodiments of the present disclosure. In some embodiments, the asset monitoring system generates the graphical user interface 500 and provides the graphical user interface 500 to one or more computing devices 111 for rendering on a display 114. In some embodiments, the ranking of assets 501 includes a numerical rank of the associated asset (e.g., the numerical ranking being generated by the asset monitoring system based at least in part on monitored data associated with the asset).

Additionally, or alternatively, in some embodiments, the graphical user interface 500 includes, for each asset in the ranking of assets 501, one or more performance metrics 503A, 503B, 503C, 503D, 503E, 503F, including respective values thereof. In some embodiments, a column ordering of the performance metrics shown in the graphical user interface 500 is based at least in part on one or more of normalized values of the performance metrics, aggregated values of the performance metrics, and weighted values of the performance metrics. In one example, the asset monitoring system may identify a top-ranked performance metric based on determining a particular performance metric for the top-ranked asset in the ranking of assets 501 that demonstrates the greatest level of deviation from a predetermined threshold value, expected value, and/or other reference value (e.g., the asset monitoring system may identify the performance metric(s) that most contributed to an asset being identified as a poor-performance asset). In this example, the asset monitoring system may assign a first column to the particular performance asset (e.g., and may assign second, third, and proceeding columns based on descending order of level of deviation for remaining performance metrics).

In some embodiments, the graphical use interface 500 includes an asset name 502 of each asset in the ranking of assets 501. Additionally, or alternatively, in some embodiments, the graphical user interface 500 includes an asset type 504 of each asset in the ranking of assets 501. In some embodiments, in response to receiving a user input selecting a particular asset type rendered on the graphical user interface 500, the asset monitoring system determines a plurality of assets associated with the particular asset type and generates and renders, on the graphical user interface 500, a ranking of assets 501 for the determined plurality of assets. Additionally, or alternatively, in some embodiments, the graphical user interface 500 includes an asset description 506 of each asset in the ranking of assets 501. Additionally, or alternatively, in some embodiments, the graphical user interface 500 includes any suitable number of hierarchies 421A, 421B, 421C, 421D with which the assets of the ranking of assets 501 are associated. In some embodiments, in response to receiving a user input selecting a particular hierarchy rendered on the graphical user interface 500, the asset monitoring system determines a plurality of assets associated with the particular hierarchy and generates and renders, on the graphical user interface 500, a ranking of assets 501 for the determined plurality of assets. In some embodiments, the graphical user interfaces generated by the present asset monitoring systems provide various end user advantages. In some embodiments, the graphical user interface and ranking of assets therein allows a user, or other controlling entity, to more rapidly determine which assets to prioritize for purposes of directing maintenance operations. For example, the graphical user interface may improve the efficiency of resource allocation by allowing the user to direct resources towards highest priority poor performance assets. As another example, by providing the graphical user interface, the present asset monitoring systems may provide for iterative investigation of asset performances, such as by generating and displaying rankings of assets at varying levels of hierarchy (e.g., assets at all facilities, assets at a particular facility, assets at a particular area of a facility, assets associated with a particular industrial process or product, assets associated with a particular resource, such as parts, human capital, and/or the like).

In some embodiments, in response to receiving a user input selecting a particular asset of the ranking of assets 501, the asset monitoring system may generate, and/or retrieve, and render on the graphical user interface 500, one or more poor performance factors for the selected asset and/or one or more recommended mitigation actions for the selected asset.

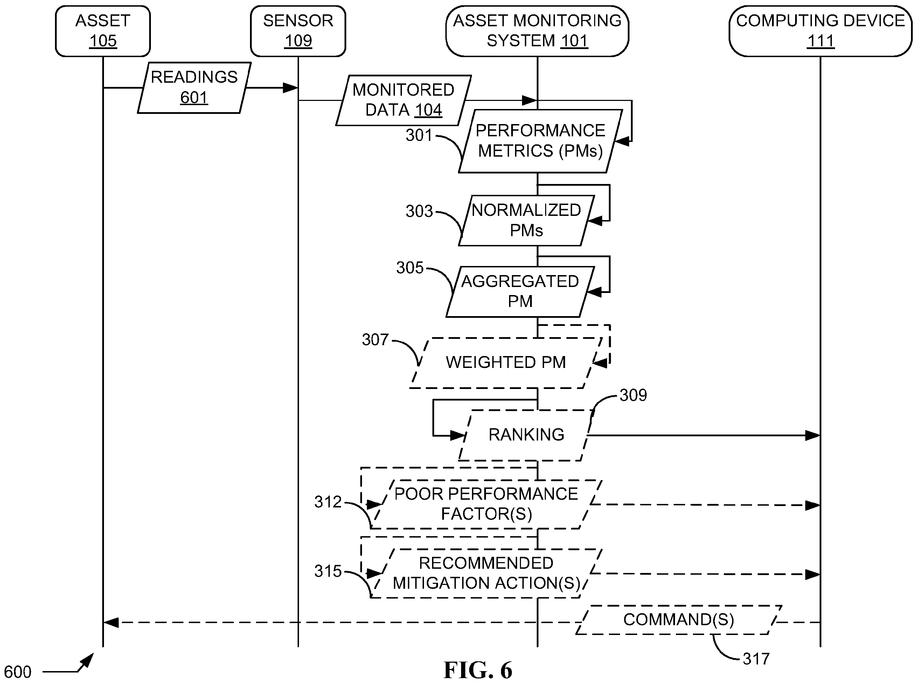

FIG. 6 illustrates an example diagram 600 for outputting a ranking of assets based at least in part on performance metrics in accordance with at least some example embodiments of the present disclosure. The example diagram 600 indicates flow and generation of data between an asset 105, a sensor 109, an asset monitoring system 101 (e.g., which may be embodied as the apparatus 200 shown in FIG. 2 and described herein), and the computing device 111.

As illustrated, in some embodiments, the sensor 109 measures one or more operational aspects or properties of an asset 601 to generate one or more readings 601. In some embodiments, the sensor 109 generates, based at least in part on the readings 601, monitored data 104. In some embodiments, the asset monitoring system 101 receives, from the sensor 109, the monitored data 104. Alternatively, or additionally, in some embodiments, the asset monitoring system 101 collects the monitored data 104 from the sensor 109 at a predetermined sampling frequency.

In some embodiments, the asset monitoring system 101 generates, based at least in part on the monitored data 104, a plurality of performance metrics 301 for the asset 105. In some embodiments, the asset monitoring system 101 generates, based at least in part on the plurality of performance metrics 301, a plurality of normalized performance metrics 303 for the asset 105. In some embodiments, the asset monitoring system 101 generates, based at least in part on the plurality of normalized performance metrics 303, an aggregated performance metric 305 for the asset 105. In some embodiments, the asset monitoring system optionally generates a weighted performance metric 307 for the asset 105 based at least in part on the aggregated performance metric 305 and a weight value for the asset, such as an importance factor.

In some embodiments, the asset monitoring system 101 generates one or more poor performance factors 312 for the asset 105 using a first model and based at least in part on one or more of the performance metrics 301, the normalized performance metrics 303, the aggregated performance metric 305, the weighted performance metric 307, and potentially other data. In some embodiments, the asset monitoring system 101 provides the poor performance factor(s) 312, and potentially other data, to a computing device 111 for presentation to a user.

In some embodiments, the asset monitoring system 101 generates one or more recommended mitigation actions 315 for the asset 105 using a second model and based at least in part one or more of the poor performance factor(s) 312, the performance metrics 301, the normalized performance metrics 303, the aggregated performance metric 305, the weighted performance metric 307, and potentially other data. In some embodiments, the asset monitoring system 101 provides the recommended mitigation actions 315, and potentially other data, to the computing device 111 for presentation to the user.

In some embodiments, the asset monitoring system 101 generates one or more commands 317 based at least in part on the recommended mitigation action(s) 315. The command(s) 317 can include a command for adjusting one or more operational aspects or other properties of the asset 105, or for instructing a user associated with managing the asset 105. In some embodiments, the asset monitoring system 101 provides the command(s) 317, and potentially other data, to the computing device 111 for presentation to the user and/or to the asset 105 (e.g., or a system in control thereof) for execution. In some embodiments, in response to receiving a user input approving the recommended mitigation action 315, the computing device 111, or asset monitoring system 101, transmits the command(s) 317 to the asset 105 (e.g., or a system in control thereof) for execution.

Alternatively, or additionally, in some embodiments, the asset monitoring system 101 monitored data 104 for an additional plurality of assets. In some embodiments, the asset monitoring system 101 generates, for each of the plurality of assets, performance metrics 301, normalized performance metrics 303, an aggregated performance metric 305, and/or a weighted performance metric 307. In some embodiments, the asset monitoring system generates a ranking 309 of the plurality of assets, including the asset 105, based at least in part on the aggregated performance metrics 305 or the weighted performance metrics 307. In some embodiments, the asset monitoring system 101 identifies one or more poor-performing assets based on the ranking 309. In some embodiments, the asset monitoring system 101 determines one or more poor performance factors 312 for the poor-performing assets. In some embodiments, the asset monitoring system 101 generates one or more recommended mitigation actions 315 for the poor-performing assets. In some embodiments, the asset monitoring system 101, and/or the computing device 111, generates one or more commands 317 for performing the recommended mitigation actions 315. In some embodiments, the asset monitoring system 101 transmits the command(s) 317 to the computing device 111 (e.g., or to a particular computing device 111 associated with each asset). In some embodiments, the computing device 111, or the asset monitoring system 101, transmits one or more commands 317 to the associated one of the plurality of assets from the ranking 309.

### EXAMPLE PROCESSES OF THE DISCLOSURE

Having described example systems and apparatuses, data architectures, data flows, and graphical representations in accordance with the disclosure, example processes of the disclosure will now be discussed. It will be appreciated that each of the flowcharts depicts an example computer-implemented process that is performable by one or more of the apparatuses, systems, devices, and/or computer program products described herein, for example utilizing one or more of the specially configured components thereof.

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

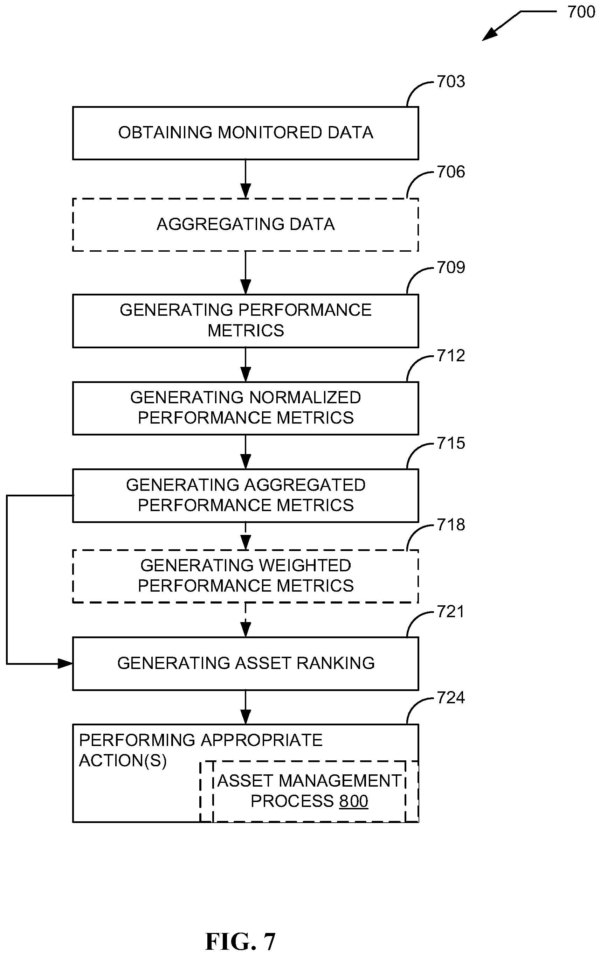

FIG. 7 illustrates a flowchart illustrating an example process for monitoring assets including outputting a ranking of assets in accordance with at least some example embodiments of the present disclosure. Specifically, FIG. 7 depicts operations of an example process 700. In some embodiments, the process 700 is embodied by computer program code stored on a non-transitory computer-readable storage medium of a computer program product configured for execution to perform the process as depicted and described. Alternatively or additionally, in some embodiments, the process 700 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 203 and/or another component depicted and/or described herein and/or otherwise accessible to the apparatus 200, for performing the operations as depicted and described. In some embodiments, the apparatus 200 is in communication with one or more external apparatus(es), system(s), device(s), and/or the like, to perform one or more of the operations as depicted and described. For example, the apparatus 200 in some embodiments is in communication with at least one apparatus, at least one sensor associated with the at least one apparatus, at least one end-user computing device, and/or in some embodiments an optional external control system. For purposes of simplifying the description, the process 700 is described as performed by and from the perspective of the apparatus 200. In some embodiments, the apparatus 200 initiates the process 700 in response to receiving a user input. The user input may identify a particular plurality of assets to be monitored via the process 700. The user input may identify one or more particular asset environments, one or more industrial processes, one or more industrial products, and/or one or more asset hierarchies, the associated assets of which are to be monitored via the process 700. The apparatus 700 may automatically identify the associated assets based at least in part on the user input. Alternatively, or additionally, in some embodiments, the apparatus 200 initiates the process 700 automatically in response to determining that a predetermined interval (e.g., 5 minutes, 1 hour, 1 day, or any suitable interval) has elapsed since an event, such as a previous performance of the process 700. Alternatively, or additionally, in some embodiments, the apparatus 200 initiates the process 700 automatically in response to receiving an alert for an event, such as an alert for an error or other abnormality in an industrial process or product associated with an asset environment including a plurality of assets.

The process 700 begins at operation 703. At operation 703, the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that obtain monitored data for each of a plurality of assets. In some embodiments, the apparatus 200 receives the monitored data for each asset in real-time via one or more sensors associated the asset. Alternatively, or additionally, in some embodiments, the apparatus 200 retrieves the monitored data, or a portion thereof, from one or more data stores, such as the data store 102 or memory 203. Alternatively, or additionally, in some embodiments, the apparatus 200 receives the monitored data, or a portion thereof, from the asset itself.

At operation 706, the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that optionally aggregate the monitored data for the plurality of assets with additional data including, but not limited to, historical monitored data for one or more assets or asset data for one or more assets, such as, for example, asset type, responsible user identifier(s), asset hierarchy, criticality metric for the asset, cost metric for the asset, and downtime metric for the asset. In some embodiments, the apparatus 200 optionally excludes one or more assets from further operations of the process 700 in response to determining that the asset is associated with a particular downtime metric, such as an indication that the asset is currently undergoing maintenance, replacement, and/or other service.

At operation 709, the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that generate a plurality of performance metrics for each of the plurality of assets based at least in part on the corresponding monitored data, and potentially other data, such as asset data associated with the asset. In some embodiments, the apparatus 200 determines at least one asset type for each of the plurality of assets. In some embodiments, the apparatus 200 determines, for each asset type, a corresponding plurality of performance metrics to generate for assets associated with the asset type. In one example, based on asset data for each asset indicated in the monitored data, the apparatus 200 determines one or more asset types for each asset. Continuing the example, further based on the asset data for each asset and/or asset data for each determined asset type, the apparatus 200 determines a corresponding plurality of performance metrics. By customizing the performance metrics for each asset based on the asset type(s), the apparatus 200 may more accurately and precisely quantify and characterize the level of performance of the asset as opposed to other techniques that are limited to utilizing global performance metrics that may not be one-to-one comparable across type-varied assets.

At operation 712, the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that generate a plurality of normalized performance metrics for each of the plurality of assets based at least in part on the corresponding plurality of performance metrics associated with the asset.

At operation 715, the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that generate an aggerated performance metric for each of the plurality of assets based at least in part on the plurality of normalized performance metrics for the asset. As described herein, in some embodiments, the aggregated performance metric is a mean performance metric based at least in part on the plurality of normalized performance metrics, and potentially other data, such as one or more performance metric weights that may be applied by the apparatus 200 to a subset of the plurality of normalized performance metrics.

At operation 718, the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that optionally generate a weighted performance metric for each of the plurality of assets based at least in part on a weight value and the aggregated performance metric associated with the asset. In some embodiments, the weight value is an importance factor associated with the asset. In some embodiments, the importance factor is a particular importance factor of a plurality of importance factors associated with the asset. In some embodiments, the apparatus 200 determines the particular importance factor based at least in part on asset data associated with the asset, such as, for example, a location of the asset (e.g., a particular asset environment or location therein), a cost metric for the asset, a criticality metric for the asset, a downtime metric for the asset, an asset type, one or more users, and/or aspects thereof, who are responsible for servicing the asset, and/or a position of the asset in a hierarchy of assets associated with a particular asset environment, a particular industrial process, and/or a particular industrial product.

At operation 721, the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that generate a ranking of the plurality of assets based at least in part on the aggregated performance metric, and/or weighted-performance metric, of each asset. In some embodiments, the ranking of the plurality of assets indicates a level of poor performance of each of the plurality of assets. For example, the ordered arrangement of assets in the ranking may provide a comparative, type-agnostic indication of how poorly an asset may be performing in comparison to other assets based on asset-individualized determinations of poor performance indicated in the performance metrics of each asset (e.g., from which the ranking is generated). In some embodiments, the ranking of the plurality of assets includes a subset of the plurality of assets for which the corresponding aggregated performance metric, and/or weighted performance metric, fails to meet a predetermined threshold, such as a maximum metric value. In some embodiments, the ranking includes a particular number of assets from the plurality of assets (e.g., 10 assets, 20 assets, 100 assets, or any suitable number of assets). The apparatus 200 may automatically determine the particular number of assets based at least in part on determining a quantity of assets for which the corresponding aggregated performance metric, and/or weighted performance metric, fails to satisfy a predetermined threshold. The apparatus 200 may determine the particular number of assets based at least in part on a user input for the particular number (e.g., which the apparatus 200 may receive from one or more computing devices, such as the computing device 111 shown in FIG. 1 and described herein).

Alternatively, or additionally, in some embodiments, the apparatus 200 may generate the ranking, and/or update the ranking, based at least in part on one or more poor performance factors determined for one or more assets associated with the ranking. Alternatively, or additionally, in some embodiments, the apparatus 200 may generate the ranking, or update the ranking, based at least in part on one or more recommended mitigation actions generated for one or more assets associated with the ranking. Alternatively, or additionally, in some embodiments, the apparatus 200 may generate the ranking, and/or update the ranking, based at least in part on asset data associated with one or more assets associated with the ranking, such as a cost metric for the asset, criticality metric for the asset, downtime metric for the asset, and/or one or more privileges, responsibilities, or levels of scope of one or more users associated with the asset.

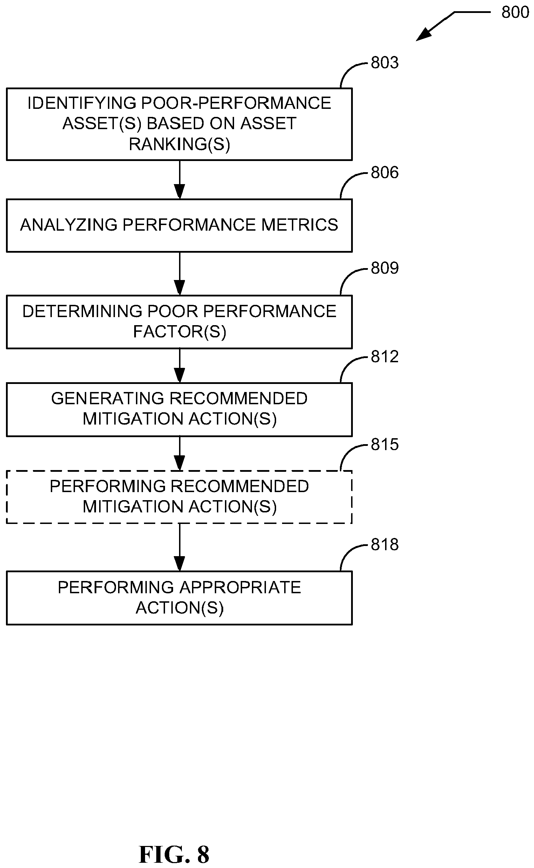

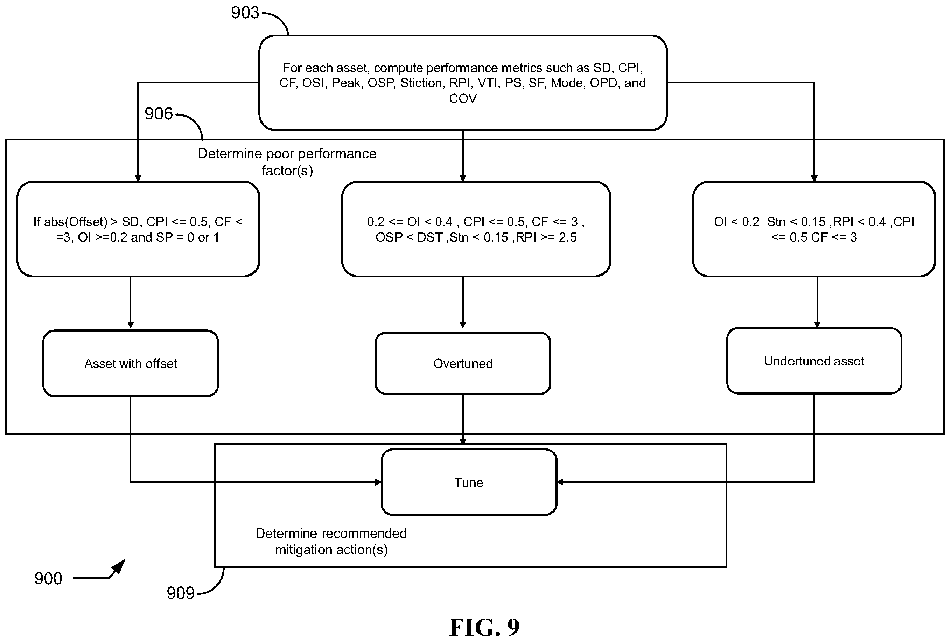

At operation 724, the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that perform one or more appropriate actions. In some embodiments, the apparatus 200 determines one or more poor performance factors for one or more assets from the ranking. Alternatively, or additionally, in some embodiments, the apparatus 200 generates one or more recommended mitigation actions for one or more assets from the ranking. In some embodiments, to the determine the one or more poor performance factors and/or generate the one or more recommended mitigation actions, the apparatus 200 performs one or more asset management processes, such as the process 800 shown in FIG. 8 and described herein. Alternatively, or additionally, in some embodiments, the apparatus 200 performs one or more sequences for generating a recommended mitigation action, such as any of the sequences 900, 1000, 1100, and 1200 shown in FIGS. 9, 10, 11, and 12, respectively, and described herein.

Alternatively, or additionally, in some embodiments, the apparatus 200 provides the ranking to one or more computing devices. Alternatively, or additionally, in some embodiments, the apparatus 200 generates, and provides to one or more computing devices, a graphical user interface including the ranking, and potentially other data, such as asset data associated with the assets from the ranking. Alternatively, or additionally, in some embodiments, the apparatus 200 stores the ranking (e.g., and potentially other data, such as monitored data for assets in the ranking and/or performance metrics derived therefrom) in one or more data stores, such as in asset data 108 at the data store 102 shown in FIG. 1 and described herein.

FIG. 8 illustrates a flowchart depicting operations of an example process for managing assets including outputting a recommended mitigation action based at least in part on a ranking of the assets in accordance with at least some example embodiments of the present disclosure. Specifically, FIG. 8 depicts operations of an example process 800. In some embodiments, the process 800 is embodied by computer program code stored on a non-transitory computer-readable storage medium of a computer program product configured for execution to perform the process as depicted and described. Alternatively or additionally, in some embodiments, the process 800 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 203 and/or another component depicted and/or described herein and/or otherwise accessible to the apparatus 200, for performing the operations as depicted and described. In some embodiments, the apparatus 200 is in communication with one or more external apparatus(es), system(s), device(s), and/or the like, to perform one or more of the operations as depicted and described. For example, the apparatus 200 in some embodiments is in communication with at least one apparatus, at least one sensor associated with the at least one apparatus, at least one end-user computing device, and/or in some embodiments an optional external control system. For purposes of simplifying the description, the process 800 is described as performed by and from the perspective of the apparatus 200.

The process 800 begins at operation 803. In some embodiments, the process 800 begins after or during one or more operations depicted and/or described with respect to any one of the other processes described herein. For example, in some embodiments as depicted, the process 800 begins after execution of operation 721 or during the operation 724 . In this regard, some or all of the process 800 may replace, supplement, or modify one or more blocks depicted and/or described with respect to any of the processes described herein. Upon completion of the process 800, the flow of operations may terminate. Additionally or alternatively, as depicted, upon completion of the process 800 in some embodiments, flow may return to one or more operation(s) of another process, such as the operation 724. It will be appreciated that, in some embodiments, the process 800 embodies a sub-process of one or more other process(es) depicted and/or described herein, for example the process 700.

At operation 803, the apparatus 200 includes means such as data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that identify one or more poor-performance assets based at least in part on a ranking of a plurality of assets, such as a ranking outputted by the apparatus 200 via the process 700. In some embodiments, the apparatus 200 identifies, from the ranking, one or more top-ranked entries of the ranking, which may correspond to one or more assets associated with a poorest level of performance. In some embodiments, the apparatus 200 identifies, a plurality of poor-performance assets corresponding to a particular number of top-ranked entries from the ranking (e.g., 10 entries, 20 entries, 100 entries, or any suitable number of entries). The apparatus 200 may automatically determine the particular number of entries based at least in part on determining a quantity of ranked assets for which the corresponding aggregated performance metric, and/or weighted performance metric, fails to satisfy a predetermined threshold. The apparatus 200 may determine the particular number of entries based at least in part on a user input for the particular number (e.g., which the apparatus 200 may receive from one or more computing devices, such as the computing device 111 shown in FIG. 1 and described herein).

At operation 806, the apparatus 200 includes means such as the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that analyze one or more performance metrics for the poor-performance asset(s), which may include the apparatus 200 generating, and/or retrieving, and analyzing additional data based at least in part on the performance metric(s), such as an absolute value or standard deviation value of a performance metric. In some embodiments, the apparatus 200 compares one or more values of the performance metrics to one or more predetermined performance metric thresholds and/or other performance metrics, or values generated based at least in part thereon. For example, for a particular asset, the apparatus 200 may generate an absolute value of an "offset" performance metric and determine, based on a comparison, whether the absolute value exceeds a value of a "standard deviation" performance metric for the particular asset. As another example, for a particular metric, the apparatus 200 may compare a value of an oscillation index performance metric to a first predetermined threshold (e.g., a predetermined minimum oscillation index value) and a second predetermined threshold (e.g., a predetermined maximum oscillation index value). In some embodiments, the apparatus 200 analyzes one or more performance metrics of each poor-performance asset using one or more models 110, which may include outputting, via the model(s) 110 one or more determinations, such as a determination that a performance metric, or related value, satisfies or fails to satisfy one or more predetermined threshold(s).

At operation 809, the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that determine one or more poor performance factors for each of the poor performance assets. In some embodiments, the apparatus 200 determines the poor performance factor(s) based at least in part on the analysis of the performance metrics of the poor-performance asset performed at operation 806 (e.g., and/or determinations from the analysis, such as whether a performance metric satisfies or fails to satisfy one or more predetermined thresholds). In some embodiments, the apparatus 200 determines the poor performance factor(s) using one or more models 110, which may process, as input, performance metrics, or related values, and/or other data associated with a poor performance asset and output one or more poor performance factors based on the input.

Alternatively, or additionally, in some embodiments, to determine the poor performance factor(s) for a poor-performance asset, the apparatus 200 may generate a ranking of the plurality of normalized performance metrics associated with the poor-performance asset. The ordering of the plurality of normalized performance metrics in the ranking may indicate a degree to which each of the normalized performance metrics diverges from one or more predetermined thresholds, one or more expected values, and/or other reference value(s). For example, in the ranking, a top-ranked entry may correspond to a normalized performance metric for which the value thereof demonstrates the greatest delta from a predetermined threshold value, an expected value, and/or other threshold value. In some embodiments, the apparatus 200 determines the poor performance factor(s) for the poor-performance asset(s) further based at least in part on the ranking of normalized performance metrics associated with the poor performance asset (e.g., in particular embodiments, one or more top-ranked normalized performance metrics).

At operation 812, the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that generate one or more recommended mitigation actions for the poor-performance asset(s) based at least in part on one or more models 110 and one or more performance metrics (e.g., or value(s) derived therefrom) associated with the poor-performance asset(s). In some embodiments, the model 110 includes a machine learning model, such as a decision tree, a random forest classifier, a trained artificial neural network, and/or combinations of machine learning models. Alternatively, or additionally, the apparatus generates the recommended mitigation action(s) for the poor-performance asset(s) based at least in part on asset data associated with the poor-performance asset(s), such as a location of the asset (e.g., a particular asset environment or location therein), a cost metric for the asset, a criticality metric for the asset, a downtime metric for the asset, an asset type, one or more users, and/or aspects thereof, who are responsible for servicing the asset, and/or a position of the asset in a hierarchy of assets associated with a particular asset environment, a particular industrial process, and/or a particular industrial product. In some embodiments, to generate the recommended mitigation action(s) for the poor-performance asset(s), the apparatus 200 performs one or more sequences for generating a recommended mitigation action, such as any of the sequences 900, 1000, 1100, and 1200 shown in FIGS. 9, 10, 11, and 12, respectively, and described herein.

At operation 815, the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that perform the recommended mitigation action(s) generated for one or more one or more poor-performance assets. In some embodiments, the apparatus 200 automatically performs the recommended mitigation action(s). Alternatively, or additionally, in some embodiments, the apparatus 200 performs one or more recommended mitigation in response to receiving a user input from a computing device 111 or a command from another system, such as an external system. In some embodiments, to perform the recommended mitigation action(s), the apparatus 200 adjusts one or more operational parameters of the poor-performance asset, such as by generating and transmitting commands to the poor-performance asset and/or to an associated user's computing device 111.

At operation 818, the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that perform one or more appropriate actions. In some embodiments, the apparatus 200 provides one or more of the asset ranking, the normalized performance metric ranking, indications of the poor-performance asset(s), the poor performance factor(s), the recommended mitigation action(s), and potentially other data, to one or more computing devices 111, or other computing devices. Alternatively, or additionally, in some embodiments, the apparatus 200 generates, and provides to one or more computing devices, a graphical user interface asset ranking, the normalized performance metric ranking, indications of the poor-performance asset(s), the poor performance factor(s), the recommended mitigation action(s), and potentially other data. Alternatively, or additionally, in some embodiments, the apparatus 200 stores the indication of the poor-performance asset(s), the poor performance factor(s), the recommended mitigation action(s), and potentially other data, in one or more data stores, such as in asset data 108 at the data store 102 shown in FIG. 1 and described herein. Alternatively, or additionally, the apparatus 200 generates, and/or modifies, one or more training datasets based at least in part on data associated with identifying the poor-performance asset(s), the poor performance factor(s), and/or the recommended mitigation action(s). In some embodiments, the apparatus 200 generates, trains, and/or modifies one or more models 110 and based at least in part on the training dataset(s), or otherwise based at least in part on the data associated with identifying the poor-performance asset(s), the poor performance factor(s), and/or the recommended mitigation action(s).

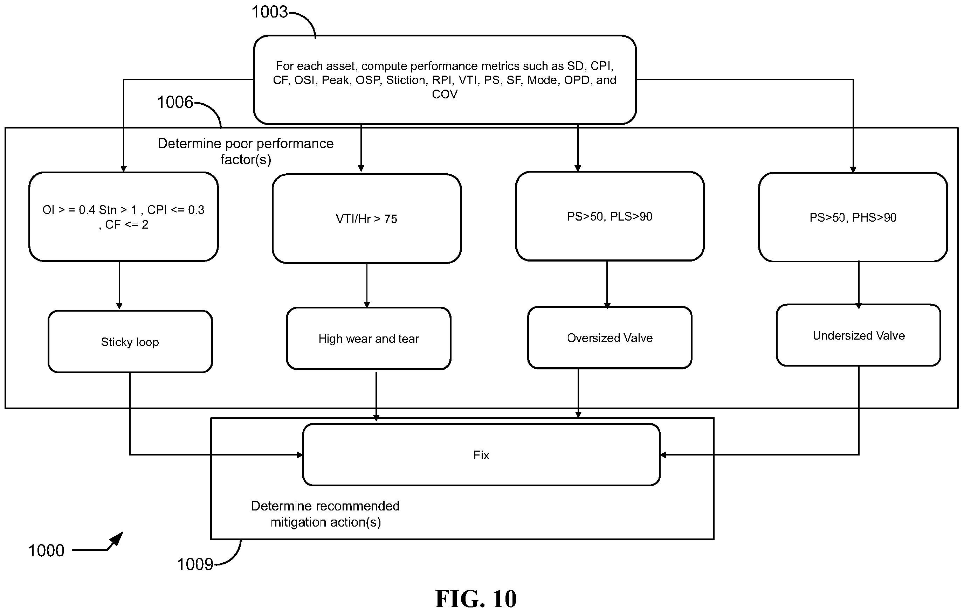

FIG. 9 illustrates a flowchart depicting operations of an example sequence for generating a recommended mitigation action based at least in part on one or more performance metrics in accordance with at least some example embodiments of the present disclosure. Specifically, FIG. 9 depicts operations of an example sequence 900. In some embodiments, the sequence 900 is embodied by computer program code stored on a non-transitory computer-readable storage medium of a computer program product configured for execution to perform the process as depicted and described. Alternatively or additionally, in some embodiments, the sequence 900 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 203 and/or another component depicted and/or described herein and/or otherwise accessible to the apparatus 200, for performing the operations as depicted and described. In some embodiments, the apparatus 200 is in communication with one or more external apparatus(es), system(s), device(s), and/or the like, to perform one or more of the operations as depicted and described. For example, the apparatus 200 in some embodiments is in communication with at least one apparatus, at least one sensor associated with the at least one apparatus, at least one end-user computing device, and/or in some embodiments an optional external control system. For purposes of simplifying the description, the sequence 900 is described as performed by and from the perspective of the apparatus 200. In some embodiments, the apparatus 200 performs the sequence 900 in addition to one or more sequences for generating a mitigation action, such as the sequences 1000, 1100, and/or 1200 shown in FIGS. 10, 11, and 12, respectively, and described herein.

The sequence 900 begins at operation 903. In some embodiments, the sequence 900 begins after one or more operations depicted and/or described with respect to any one of the other processes described herein. For example, in some embodiments as depicted, the sequence 900 begins after execution of operation 908. In this regard, some or all of the sequence 900 may replace or supplement one or more blocks depicted and/or described with respect to any of the processes described herein. Upon completion of the sequence 900, the flow of operations may terminate. Additionally or alternatively, as depicted, upon completion of the sequence 900 in some embodiments, flow may return to one or more operation(s) of another process, such as the operations 812 and/or 815. It will be appreciated that, in some embodiments, the sequence 900 embodies a sub-process of one or more other process(es) depicted and/or described herein, for example the process 700 or the process 800.

At operation 903, the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that compute, for each of one or more assets, a plurality of performance metrics. The plurality of assets may include all or a subset of assets being monitored by the apparatus 200 or include one or more poor-performance assets identified by the apparatus 200 via processes described herein, such as the process 800. The apparatus 200 may generate the plurality of assets based at least in part on respective monitored data for each of the plurality of assets. As one example, based at least in part on monitored data, the apparatus 200 generates, for each asset, standard deviation (SD), controller performance index (CPI), compression factor (CF), oscillation index (OSI), Peak, oscillation period (OSP), stiction, relative performance index (RPI), VTI, percentage saturation (PS), service factor (SF), Mode, output disposable (OPD), and coefficient of variation (COV).

At operation 906, the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that determine, for each asset, one or more poor performance factors based at least in part on the plurality of performance metrics. In some embodiments, to determine the poor performance factor(s), the apparatus 200 processes the plurality of performance metrics via one or more models 110, such as a decision tree including one or more predetermined performance metric values and/or policies. In some embodiments, the apparatus 200 compares one or more performance metrics, and/or values derived therefrom, to one or more predetermined thresholds and, based at least in part on the comparison(s), determines whether the asset is associated with the threshold(s)-associated poor performance factor.

In one example, for a particular asset, the apparatus 200 generates an absolute value of an offset performance metric abs(Offset), a standard deviation value of the offset performance metric (SD), a controller performance index (CPI) value, a compression factor (CF) value, an oscillation index (OSI or OI) value, a percentage saturation value (PS), a setpoint (SP) value, an oscillation period (OSP), a relative performance index (RPI) value, a mode value, a desired settling time (DST) value, a stiction (Stn) value, and a coefficient of variation value. Continuing the example, the apparatus 200 determines whether the associated asset is associated with a poor performance factor "asset with offset" at least in part by determining whether the value for abs(Offset) exceeds the value for SD, whether the CPI value is less than or equal to 0.5, whether the CF value is greater than 3, whether the OI value is greater than or equal to 0.2, and whether the SP value is 0 or 1. In this example, in response to positively verifying each comparison, the apparatus 200 may determine that the asset is associated with the "asset with offset" poor performance factor.

Continuing the above example, the apparatus 200 determines whether the asset is associated with an additional or alternative poor performance factor "overtuned." In this example, the apparatus 200 determines whether the OI value is greater than or equal to 0.2 and less than 0.4, whether the CPI value is greater than or equal to 0.5, whether the CF value is less than or equal to 3, whether the OSP value is less than a DST value, whether the Stn value is value less than 0.15, and whether the RPI value is greater than or equal to 2.5. Continuing the example, in response to positively verifying each comparison, the apparatus 200 may determine that the asset is associated with the overtuned performance factor, alternatively or in addition to the asset with offset performance factor. Alternatively, in this example, the apparatus 200 may determine that the OSI value is less than 0.2, the Stn value is less than 0.14, the RPI value is less than 0.4, the CPI value is less than or equal to 0.5, and the CF value is less than or equal to 3. In response to the preceding sequence of determinations, the apparatus 200 may determine that the asset is associated with an "undertuned" poor performance factor, instead of the overtuned poor performance factor, and instead of or in addition to the asset with offset poor performance factor. It will be understood and appreciate that the various computed values and thresholds values for performance metrics described herein and shown in the accompanying figures are provided for purposes of illustrating and describing operations of the present systems and processes, and that the values are exemplary in nature.

At operation 909, the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that determine, for each asset, a recommended mitigation action based at least in part on the poor performance factor(s). In some embodiments, the apparatus 200 generates the recommended mitigation action using one or more models 110 and/or based at least in part on the poor performance factor(s), and potentially other data, such as asset data and/or performance metrics associated with the asset. In some embodiments, the model 110 is a decision tree. In one example, in response to determining that an asset is associated with a poor performance factor of "undertuned," the apparatus generates, using one or more models 110, a recommended mitigation action to retune the asset using one or more tuning parameters for adjusting one or more operational aspects of the asset (e.g., the one or more tuning parameters being retrieved from asset data or outputted by the model 110).

FIG. 10 illustrates a flowchart depicting operations of an example sequence for generating a recommended mitigation action based at least in part on one or more performance metrics in accordance with at least some example embodiments of the present disclosure. Specifically, FIG. 10 depicts operations of an example sequence 1000. In some embodiments, the sequence 1000 is embodied by computer program code stored on a non-transitory computer-readable storage medium of a computer program product configured for execution to perform the process as depicted and described. Alternatively or additionally, in some embodiments, the sequence 1000 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 203 and/or another component depicted and/or described herein and/or otherwise accessible to the apparatus 200, for performing the operations as depicted and described. In some embodiments, the apparatus 200 is in communication with one or more external apparatus(es), system(s), device(s), and/or the like, to perform one or more of the operations as depicted and described. For example, the apparatus 200 in some embodiments is in communication with at least one apparatus, at least one sensor associated with the at least one apparatus, at least one end-user computing device, and/or in some embodiments an optional external control system. For purposes of simplifying the description, the sequence 1000 is described as performed by and from the perspective of the apparatus 200. In some embodiments, the apparatus 200 performs the sequence 1000 in addition to one or more sequences for generating a mitigation action, such as the sequences 900, 1100, and/or 1200 shown in FIGS. 9, 11, and 12, respectively, and described herein.

The sequence 1000 begins at operation 1003. In some embodiments, the sequence 1000 begins after one or more operations depicted and/or described with respect to any one of the other processes described herein. In this regard, some or all of the sequence 1000 may replace or supplement one or more blocks depicted and/or described with respect to any of the processes described herein. Upon completion of the sequence 1000, the flow of operations may terminate. Additionally or alternatively, as depicted, upon completion of the sequence 1000 in some embodiments, flow may return to one or more operation(s) of another process, such as the operations 812 and/or 815. It will be appreciated that, in some embodiments, the sequence 1000 embodies a sub-process of one or more other process(es) depicted and/or described herein, for example the process 700 or the process 800.

At operation 1003, the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that compute, for each of one or more assets, a plurality of performance metrics. In some embodiments, the apparatus 200 performs operation 1003 in a manner similar to operation 903 of the sequence 900.

At operation 1006, the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that determine, for each asset, one or more poor performance factors based at least in part on the plurality of performance metrics. In some embodiments, to determine the poor performance factor(s), the apparatus 200 processes the plurality of performance metrics via one or more models 110, such as a decision tree including one or more predetermined performance metric values and/or policies. In some embodiments, the apparatus 200 compares one or more performance metrics, and/or values derived therefrom, to one or more predetermined thresholds and, based at least in part on the comparison(s), determines whether the asset is associated with the threshold(s)-associated poor performance factor. In some embodiments, the apparatus 200 performs operation 1006 in a manner similar to operation 906 of the sequence 900.

At operation 1009, the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that determine, for each asset, a recommended mitigation action based at least in part on the poor performance factor(s). In some embodiments, the apparatus 200 generates the recommended mitigation action using one or more models 110 and/or based at least in part on the poor performance factor(s), and potentially other data, such as asset data and/or performance metrics associated with the asset. In some embodiments, the model 110 is a decision tree. In one example, in response to determining that an asset is associated with a "sticky loop" poor performance factor, the apparatus 200 generates, using one or more models 110, a recommended mitigation action to adjust one or more operational parameters of the asset to mitigate the sticky loop. In some embodiments, the apparatus 200 performs operation 1009 in a manner similar to operation 909 of the sequence 900.

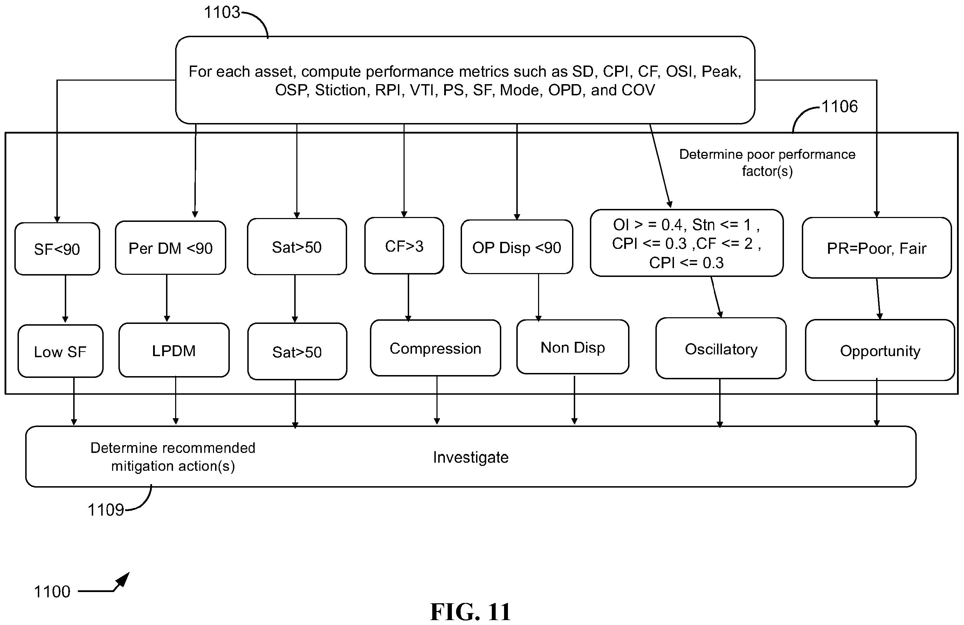

FIG. 11 illustrates a flowchart depicting operations of an example sequence for generating a recommended mitigation action based at least in part on one or more performance metrics in accordance with at least some example embodiments of the present disclosure. Specifically, FIG. 11 depicts operations of an example sequence 1100. In some embodiments, the sequence 1100 is embodied by computer program code stored on a non-transitory computer-readable storage medium of a computer program product configured for execution to perform the process as depicted and described. Alternatively or additionally, in some embodiments, the sequence 1100 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 203 and/or another component depicted and/or described herein and/or otherwise accessible to the apparatus 200, for performing the operations as depicted and described. In some embodiments, the apparatus 200 is in communication with one or more external apparatus(es), system(s), device(s), and/or the like, to perform one or more of the operations as depicted and described. For example, the apparatus 200 in some embodiments is in communication with at least one apparatus, at least one sensor associated with the at least one apparatus, at least one end-user computing device, and/or in some embodiments an optional external control system. For purposes of simplifying the description, the sequence 1100 is described as performed by and from the perspective of the apparatus 200. In some embodiments, the apparatus 200 performs the sequence 1100 in addition to one or more sequences for generating a mitigation action, such as the sequences 900, 1000, and/or 1200 shown in FIGS. 9, 10, and 12, respectively, and described herein.

The sequence 1100 begins at operation 1103. In some embodiments, the sequence 1100 begins after one or more operations depicted and/or described with respect to any one of the other processes described herein. In this regard, some or all of the sequence 1100 may replace or supplement one or more blocks depicted and/or described with respect to any of the processes described herein. Upon completion of the sequence 1100, the flow of operations may terminate. Additionally or alternatively, as depicted, upon completion of the sequence 1100 in some embodiments, flow may return to one or more operation(s) of another process, such as the operations 812 and/or 815. It will be appreciated that, in some embodiments, the sequence 1100 embodies a sub-process of one or more other process(es) depicted and/or described herein, for example the process 700 or the process 800.

At operation 1103, the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that compute, for each of one or more assets, a plurality of performance metrics. In some embodiments, the apparatus 200 performs operation 1103 in a manner similar to operation 903 of the sequence 900.

At operation 1106, the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that determines, for each asset, one or more poor performance factors based at least in part on the plurality of performance metrics. In some embodiments, to determine the poor performance factor(s), the apparatus 200 processes the plurality of performance metrics via one or more models 110, such as a decision tree including one or more predetermined performance metric values and/or policies. In some embodiments, the apparatus 200 compares one or more performance metrics, and/or values derived therefrom, to one or more predetermined thresholds and, based at least in part on the comparison(s), determines whether the asset is associated with the threshold(s)-associated poor performance factor. In some embodiments, the apparatus 200 performs operation 1106 in a manner similar to operation 906 of the sequence 900. In one example, in response to determining that an asset is associated with an oscillatory poor performance factor, the apparatus 200 generates, using one or more models 110, a recommended mitigation action for a user, an external system, or a combination thereof, to investigate the asset, and/or one or more operational parameters thereof.

At operation 1109, the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that determine, for each asset, a recommended mitigation action based at least in part on the poor performance factor(s). In some embodiments, the apparatus 200 generates the recommended mitigation action using one or more models 110 and/or based at least in part on the poor performance factor(s), and potentially other data, such as asset data and/or performance metrics associated with the asset. In some embodiments, the model 110 is a decision tree. In one example, in response to determining that an asset is associated with an oscillatory poor performance factor, the apparatus 200 generates, using one or more models 110, a recommended mitigation action for a user, an external system, or a combination thereof, to investigate asset, or one or more operational parameters thereof. In some embodiments, the apparatus 200 performs operation 1109 in a manner similar to operation 909 of the sequence 900.

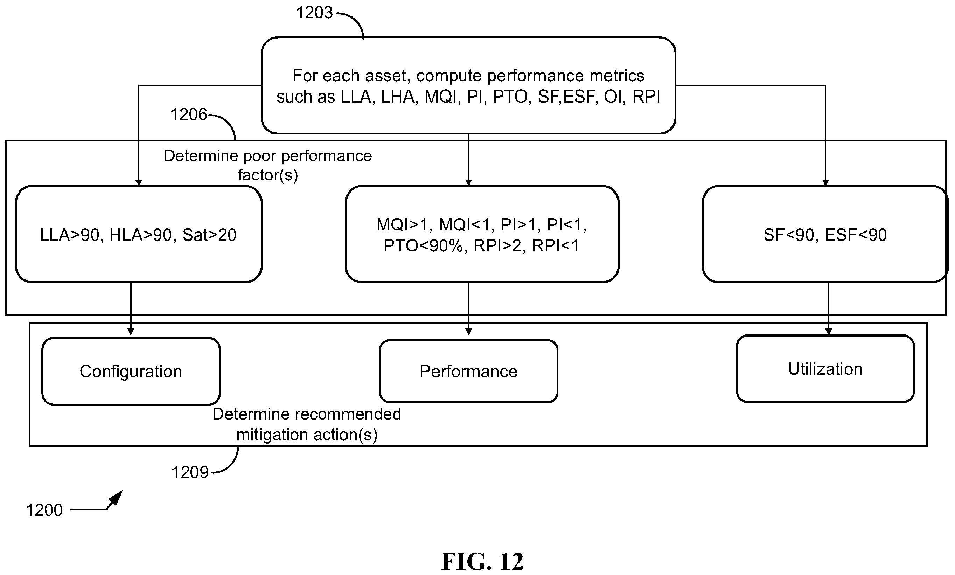

FIG. 12 illustrates a flowchart depicting operations of an example sequence for generating a recommended mitigation action based at least in part on one or more performance metrics in accordance with at least some example embodiments of the present disclosure. Specifically, FIG. 12 depicts operations of an example sequence 1200. In some embodiments, the sequence 1200 is embodied by computer program code stored on a non-transitory computer-readable storage medium of a computer program product configured for execution to perform the process as depicted and described. Alternatively or additionally, in some embodiments, the sequence 1200 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 203 and/or another component depicted and/or described herein and/or otherwise accessible to the apparatus 200, for performing the operations as depicted and described. In some embodiments, the apparatus 200 is in communication with one or more external apparatus(es), system(s), device(s), and/or the like, to perform one or more of the operations as depicted and described. For example, the apparatus 200 in some embodiments is in communication with at least one apparatus, at least one sensor associated with the at least one apparatus, at least one end-user computing device, and/or in some embodiments an optional external control system. For purposes of simplifying the description, the sequence 1200 is described as performed by and from the perspective of the apparatus 200. In some embodiments, the apparatus 200 performs the sequence 1000 in addition to one or more sequences for generating a mitigation action, such as the sequences 900, 1000, and/or 1100 shown in FIGS. 9, 10, and 12, respectively, and described herein.

The sequence 1200 begins at operation 1203. In some embodiments, the sequence 1200 begins after one or more operations depicted and/or described with respect to any one of the other processes described herein. In this regard, some or all of the sequence 1200 may replace or supplement one or more blocks depicted and/or described with respect to any of the processes described herein. Upon completion of the sequence 1200, the flow of operations may terminate. Additionally or alternatively, as depicted, upon completion of the sequence 1200 in some embodiments, flow may return to one or more operation(s) of another process, such as the operations 812 and/or 815. It will be appreciated that, in some embodiments, the sequence 1200 embodies a sub-process of one or more other process(es) depicted and/or described herein, for example the process 700 or the process 800.

At operation 1203, the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that compute, for each of one or more assets, a plurality of performance metrics. In some embodiments, the apparatus 200 performs operation 1203 in a manner similar to operation 903 of the sequence 900.

At operation 1206, the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that determines, for each asset, one or more poor performance factors based at least in part on the plurality of performance metrics. In some embodiments, to determine the poor performance factor(s), the apparatus 200 processes the plurality of performance metrics via one or more models 110, such as a decision tree including one or more predetermined performance metric values and/or policies. In some embodiments, the apparatus 200 compares one or more performance metrics, and/or values derived therefrom, to one or more predetermined thresholds and, based at least in part on the comparison(s), determines whether the asset is associated with the threshold(s)-associated poor performance factor. In some embodiments, the apparatus 200 performs operation 1206 in a manner similar to operation 906 of the sequence 900. In one example, in response to determining that an asset is associated with a "low service factor, low effective service factor" poor performance factor, the apparatus 200 generates, using one or more models 110, a recommended mitigation action to adjust one or more operational parameters of the asset to adjust a level of utilization of the asset.

At operation 1209, the apparatus 200 includes means such as the data intake circuitry 209, the data processing circuitry 211, the data analysis circuitry 213, the data prediction circuitry 215, the asset control circuitry 217, the communications circuitry 205, the input/output circuitry 207, the processor 201, and/or the like, or a combination thereof, that determine, for each asset, a recommended mitigation action based at least in part on the poor performance factor(s). In some embodiments, the apparatus 200 generates the recommended mitigation action using one or more models 110 and/or based at least in part on the poor performance factor(s), and potentially other data, such as asset data and/or performance metrics associated with the asset. In some embodiments, the model 110 is a decision tree. In one example, in response to determining that an asset is associated with a "low service factor, low effective service factor" poor performance factor, the apparatus 200 generates, using one or more models 110, a recommended mitigation action to adjust one or more operational parameters of the asset to adjust a level of utilization of the asset. In some embodiments, the apparatus 200 performs operation 1009 in a manner similar to operation 1209 of the sequence 900.

### Conclusion

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

In some embodiments, some of the operations above may be modified or further amplified. Furthermore, in some embodiments, additional optional operations may be included. Modifications, amplifications, or additions to the operations above may be performed in any order and in any combination.

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented method, comprising:
receiving monitored data associated with a plurality of assets;
generating, for each of the plurality of assets and using the monitored data, a plurality of performance metrics;
normalizing the plurality of performance metrics for each of the plurality of assets to generate a plurality of normalized performance metrics for each asset of the plurality of assets, wherein each performance metric of the plurality of normalized performance metrics indicates a level of performance of the corresponding asset;
generating an aggregated performance metric for each particular asset of the plurality of assets based at least in part on a combination of the plurality of normalized performance metrics corresponding to the asset; and
generating a ranking of the plurality of assets based at least in part on the aggregated performance metric for each asset, wherein the ranking of the plurality of assets indicates a level of poor performance for each asset of the plurality of assets.

2. The computer-implemented method of claim 1, further comprising:
generating an importance-weighted performance metric for each of the plurality of assets based at least in part on a importance factor corresponding to the asset and the aggregated performance metric corresponding to the asset; and
generating the ranking of the plurality of assets based at least in part on the importance-weighted performance metric.

3. The computer-implemented method of claim 1, further comprising:
determining an asset type of each of the plurality of assets; and
generating the plurality of performance metrics for each particular asset of the plurality of assets based at least in part on the asset type corresponding to the particular asset.

4. The computer-implemented method of claim 3, further comprising:
determining the importance factor for each particular asset of the plurality of assets based at least in part on the asset type corresponding to the particular asset.

5. The computer-implemented method of claim 1, further comprising:
identifying a particular poor-performance asset from the plurality of assets based at least in part on the ranking; and
determining at least one poor performance factor for the particular poor-performing asset based at least in part on the plurality of normalized performance metrics associated with the particular poor-performance asset.

6. The computer-implemented method of claim 5, further comprising:
generating a second ranking of the plurality of normalized performance metrics associated with the particular poor-performing asset, wherein the second ranking of the plurality of normalized performance metrics indicates a degree of difference between each normalized performance metric from a reference value corresponding to the performance metric; and
determining the at least one poor performance factor based at least in part on the second ranking of the plurality of normalized performance metrics.

7. The computer-implemented method of claim 1, further comprising:
identifying a particular poor-performance asset from the plurality of assets based at least in part on the ranking; and
determining at least one poor performance factor for the particular poor-performing asset based a comparison between one or more predetermined thresholds and at least one performance metric of the plurality of performance metrics associated with the particular poor-performance asset.

8. The computer-implemented method of claim 7, further comprising:
adjusting the one or more predetermined thresholds based at least in part on at least one of a downtime metric, a criticality metric, a cost metric, or other user-inputted metric.

9. The computer-implemented method of claim 5, further comprising:
generating, using a machine learning model and the at least one poor performance factor, at least one recommended mitigation action associated with the particular poor-performing asset.

10. The computer-implemented method of claim 9, wherein the machine learning model is a decision tree.

11. The computer-implemented method of claim 9, further comprising:
automatically performing the at least one recommended mitigation action by automatically adjusting one or more operational parameters of the particular poor-performance asset.

12. A computing apparatus comprising at least one processor and at least one non-transitory memory having computer-coded instructions stored thereon, the computer coded instructions configured to, in execution with the at least one processor, cause the apparatus to:
receive monitored data associated with a plurality of assets;
generate, for each of the plurality of assets and using the monitored data, a plurality of performance metrics;
normalize the plurality of performance metrics for each of the plurality of assets to generate a plurality of normalized performance metrics for each asset of the plurality of assets, wherein each performance metric of the plurality of normalized performance metrics indicates a level of performance of the corresponding asset;
generate an aggregated performance metric for each particular asset of the plurality of assets based at least in part on a combination of the plurality of normalized performance metrics corresponding to the asset; and
generate a ranking of the plurality of assets based at least in part on the aggregated performance metric for each asset, wherein the ranking of the plurality of assets indicates a level of poor performance for each asset of the plurality of assets.

13. The computing apparatus of claim 12, wherein an ordering of the plurality of assets in the ranking indicates poor-performing assets.

14. The computing apparatus of claim 12, wherein the one or more processors are further configured to:
generate a user interface based at least in part on the ranking; and
provide the user interface to at least one computing device.

15. A computer program product comprising at least one non-transitory, computer-readable storage medium including instructions that, upon execution by at least one processor, configure the computer program product to:
receive monitored data associated with a plurality of assets;
generate, for each of the plurality of assets and using the monitored data, a plurality of performance metrics;
normalize the plurality of performance metrics for each of the plurality of assets to generate a plurality of normalized performance metrics for each asset of the plurality of assets, wherein each performance metric of the plurality of normalized performance metrics indicates a level of performance of the corresponding asset;
generate an aggregated performance metric for each particular asset of the plurality of assets based at least in part on a combination of the plurality of normalized performance metrics corresponding to the asset; and
generate a ranking of the plurality of assets based at least in part on the aggregated performance metric for each asset, wherein the ranking of the plurality of assets indicates a level of poor performance for each asset of the plurality of assets.
